(19) Europäisches Patentamt
European Patent Office
Office européen des brevets

(11) EP 4 610 238 A1

(12) EUROPEAN PATENT APPLICATION
published in accordance with Art. 153(4) EPC

(43) Date of publication:
**03.09.2025 Bulletin 2025/36**

(21) Application number: **23882410.6**

(22) Date of filing: **10.10.2023**

(51) International Patent Classification (IPC):
***C04B 22/10*** *(2006.01)* ***C01F 11/18*** *(2006.01)*
***C04B 24/26*** *(2006.01)* ***C04B 28/02*** *(2006.01)*

(52) Cooperative Patent Classification (CPC):
**C01F 11/18; C04B 22/10; C04B 24/26; C04B 28/02**

(86) International application number:
**PCT/JP2023/036746**

(87) International publication number:
**WO 2024/090201 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 JP 2022169972**

(71) Applicant: **Kao Corporation**
**Chuo-ku,**
**Tokyo 103-8210 (JP)**

(72) Inventors:
- **KAWAKAMI, Hiroyuki**
  **Wakayama-shi, Wakayama 640-8580 (JP)**
- **SHIMADA, Kohei**
  **Wakayama-shi, Wakayama 640-8580 (JP)**
- **NAGOSHI, Yuto**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

# (54) HIGH-EARLY-STRENGTH AGENT FOR HYDRAULIC COMPOSITIONS

(57) Provided are an early strength enhancer for hydraulic compositions which improves the strength of hardened products of hydraulic compositions after, for example, 5 to 20 hours from preparation, and a method for producing the same, and a hydraulic composition which improves the strength of hardened products of the hydraulic composition after, for example, 5 to 20 hours from preparation, and a method for producing the same.

An early strength enhancer for hydraulic compositions containing (a) calcite with a crystallite size in the (104) plane calculated by the Scherrer equation of 30 nm or less (hereinafter referred to as component (a)).

## Description

Field of the Invention

The present invention relates to an early strength enhancer for hydraulic compositions and a hydraulic composition.

Background of the Invention

Concrete may be required to develop demolding strength at an early stage when placed in formwork after mixing of a hydraulic powder such as Portland cement or the like, aggregate, and water. For example, when concrete for secondary tunnel linings is placed using travelling tunnel formwork, it is required to be capable of being demolded the next morning after placing from the viewpoint of productivity. Especially in winter, since the hardening reaction of concrete occurs slowly, there are many cases where high early strength is required. Further, at precast concrete production sites, so-called twice-a-day production in which placing in the same formwork is performed twice a day may be carried out to produce a large number of products with a small number of formwork. In that case, since the processes from placing to demolding of concrete need to be performed in a short period of time, there are many cases where high early strength is required. Raising concrete temperature by steam curing or heat curing is effective at obtaining high early strength, but steam curing or heat curing is not preferable from economic and environmental viewpoints, and thus, there is a need to obtain sufficiently high early strength at low temperatures.

On the other hand, from the viewpoint of realizing a low-carbon society, attention is focused on so-called carbon recycling in which carbon dioxide is considered as a carbon resource and this is recovered and reused for various types of carbon compounds. One example of the materials for which carbon dioxide can be reused is calcium carbonate, and there is a need for technology to add high value to calcium carbonate.

JP-A 2017-206428 discloses a hardening accelerator for cement having both functions of increasing compression strength and reducing shrinkage, the hardening accelerator being added during the preparation of concrete, and consisting of an aqueous suspension composed mainly of a colloid of fine nanosize particles of calcium carbonate with an average particle size of 10 to 400 nm and containing a specific amount of a specific surfactant component.

Summary of the Invention

The present invention provides an early strength enhancer for hydraulic compositions which improves the strength of hardened products of hydraulic compositions after, for example, 5 to 20 hours from preparation, and a method for producing the same, and a hydraulic composition which improves the strength of hardened products of the hydraulic composition after, for example, 5 to 20 hours from preparation, and a method for producing the same.

The present invention relates to an early strength enhancer for hydraulic compositions containing (a) calcite with a crystallite size in the (104) plane calculated by the Scherrer equation of 30 nm or less (hereinafter referred to as component (a)).

Further, the present invention relates to a hydraulic composition containing component (a), a hydraulic powder, and water.

Further, the present invention relates to a method for producing an early strength enhancer for hydraulic compositions including mixing component (a).

Further, the present invention relates to a method for producing a hydraulic composition including mixing component (a), a hydraulic powder, and water.

Further, the present invention relates to use as an early strength enhancer for hydraulic compositions of an agent containing component (a).

Further, the present invention relates to a method for producing (a) calcite with a crystallite size in the (104) plane calculated by the Scherrer equation of 30 nm or less including the following step 1, step 2, and step 3,

step 1: a step of mixing calcium hydroxide, water, and the following component (c) at a mass ratio of a mixing amount of calcium hydroxide to a mixing amount of component (c) (calcium hydroxide/(c)) of 10 or more and 100 or less to prepare a water dispersion of calcium hydroxide,
component (c): one or more compounds selected from hydroxides of alkaline earth metals, sulfates, magnesium salts, zinc salts, organic acids and salts thereof, and polyacrylic acid and salts thereof,
step 2: a step of blowing carbon dioxide gas into the water dispersion prepared in step 1 while keeping the water dispersion at 7°C or more and 30°C or less to produce a calcite water dispersion, and
step 3: a step of aging, storing, or drying the calcite water dispersion obtained in step 2 at 40°C or less.

The present invention provides an early strength enhancer for hydraulic compositions which improves the strength of hardened products of hydraulic compositions after, for example, 5 to 20 hours from preparation, and a method for producing the same, and a hydraulic composition which improves the strength of hardened products of the hydraulic composition after, for example, 5 to 20 hours from preparation, and a method for producing the same.

Embodiments of the Invention

The acting mechanism by which the early strength enhancer for hydraulic compositions of the present invention improves the strength of hydraulic compositions after, for example, 5 to 20 hours from preparation is not wholly certain, but is inferred to be as follows.

It is known that the initial strength of ordinary Portland cement is generally greatly affected by the hydration reaction of alite, a main component of ordinary Portland cement. It is considered that the rate of the hydration reaction of alite is determined by the nucleation and growth of calcium silicate hydrates (C-S-H) produced by the hydration reaction, and thus, it is known that adding a nucleus of C-S-H or a compound that can be a reaction field is effective as a means of accelerating the hydration reaction of alite. Calcium carbonate, especially calcite, is publicly known as a nucleus of C-S-H or one of the compounds that can be reaction fields, but of these effects, in order for calcite to act as a nucleus of C-S-H, adding calcite with a sufficiently small size is considered important. However, the present inventors have found that calcite cannot be a nucleus of C-S-H only because it has a small particle size, and even with the same particle size, it does not act as a nucleus if the crystallite size is not small. The reason for this is inferred to be as follows. In other words, it is inferred that the size of calcite particles acting as a nucleus of C-S-H is about 20 nm or less, and it is inferred that the fact that the absolute amount of calcite of 20 nm or less is larger in calcite with a smaller crystallite size is important for the acceleration of the hydration reaction. Therefore, it is inferred that calcite with a small crystallite size can efficiently accelerate the hydration reaction in a small addition amount, and on the other hand, calcite with a large crystallite size must be added in a large amount to achieve a sufficient effect of accelerating the hydration reaction.

[Early strength enhancer for hydraulic compositions]

The early strength enhancer for hydraulic compositions of the present invention contains calcite with a crystallite size in the (104) plane calculated by the Scherrer equation of 30 nm or less as component (a). Further, the early strength enhancer for hydraulic compositions of the present invention may contain minerals other than calcite, for example, calcium hydroxide remaining as an unreacted component of the carbonation reaction, calcium carbonate such as vaterite, aragonite or the like, hydrates of calcium carbonate such as ikaite or the like, basic calcium carbonate, and in addition thereto, amorphous calcium carbonate. However, these forms of calcium carbonate other than calcite are excluded from component (a) of the present invention.

Calcite is calcium carbonate having the crystal structure of calcite.

Vaterite is calcium carbonate having the crystal structure of vaterite.

Aragonite is calcium carbonate having the crystal structure of aragonite.

Ikaite is the hexahydrate of calcium carbonate having the crystal structure of ikaite.

Basic calcium carbonate is the crystal mineral represented by the chemical composition $Ca_3(OH)_2(CO_3)_2 \cdot 1.5H_2O$.

Calcite of component (a) has a crystallite size in the (104) plane calculated by the Scherrer equation of 30 nm or less, preferably 25 nm or less, and more preferably 20 nm or less, and preferably 5 nm or more, more preferably 10 nm or more, and further preferably 15 nm or more from the viewpoint of high early strength of hydraulic compositions.

The crystallite size in the (104) plane of calcite can be calculated by employing an X-ray structure diffractometer (for example, the benchtop X-ray diffractometer MiniFlex600 manufactured by Rigaku Holdings Corporation) and using the following Scherrer equation:

$$D = K\lambda/(\beta\cos\theta)$$

D: crystallite size (nm)
K: Scherrer constant
$\lambda$: wavelength of measuring X-ray
$\beta$: half width of X-ray peak of measured subject
$\theta$: Bragg angle of X-ray peak of measured subject

The crystallite size in the present invention is preferably measured by using CuK$\alpha$ radiation as the X-ray. If CuK$\alpha$ is used, the wavelength $\lambda$ = 1.5406 Å. Further, calculations are made with the Scherrer constant as 0.9 and the Bragg angle

of the (104) plane of calcite as 14.657 deg.

A BET specific surface area of calcite of component (a) is preferably 20 $m^2/g$ or more, more preferably 40 $m^2/g$ or more, and further preferably 60 $m^2/g$ or more, and preferably 200 $m^2/g$ or less, more preferably 100 $m^2/g$ or less, and further preferably 80 $m^2/g$ or less from the viewpoint of high early strength of hydraulic compositions.

BET specific surface area is the surface area of solid particles measured by a gas adsorption method from the adsorption volume of particles of a gas such as nitrogen ($N_2$) or the like adsorbed thereon. Specifically, the specific surface area is determined by measuring the monomolecular adsorption volume VM from the relation between the pressure P and the adsorption volume V by the BET equation (Brunauer, Emmett and Teller's equation), and the measurement can be performed by using a fully automated specific surface area measuring device (for example, the fully automated specific surface area measuring device Macsorb manufactured by MOUNTECH Co., Ltd.) as the measuring device.

An average primary particle size of calcite of component (a) is preferably 5 nm or more, more preferably 10 nm or more, further preferably 15 nm or more, furthermore preferably 20 nm or more, and furthermore preferably 25 nm or more, and preferably 50 nm or less, more preferably 40 nm or less, and further preferably 35 nm or less from the viewpoint of high early strength of hydraulic compositions.

The average primary particle size of calcite of component (a) can be calculated by using the following formula:

$$d = 6/(\rho \times s)$$

d: average particle size (nm)
ρ: density of calcium carbonate
s: specific surface area

The specific surface area in the present invention can be measured by a gas adsorption method using nitrogen, vapor, argon, krypton or the like, and the BET specific surface area measured by the above BET method using nitrogen gas is preferably used. Further, the average particle size of calcium carbonate in the present invention is calculated with the density of calcium carbonate as 2.71.

The early strength enhancer for hydraulic compositions of the present invention may contain primary aggregates into which calcite of component (a) aggregates. In the present invention, the term "primary aggregates" means particle clusters into which primary particles of calcite irreversibly aggregate and fuse, i.e., the smallest particle cluster unit that cannot be dispersed any further. The "primary aggregates" in the present invention are particle clusters corresponding to the so-called aggregates in the context of carbon black.

The primary aggregates of calcite of component (a) are preferably spherical from the viewpoint of high early strength of hydraulic compositions. Spherical may mean not only perfectly spherical but also ellipsoidal, substantially spherical, or those having fine pores or uneven spots on the surface, and means those with a ratio of the short diameter to the long diameter of 1:1 to 1:2. The primary particles of calcite linking together to form chains are not considered spherical. The shape of the primary aggregates of calcite can be observed by a transmission electron microscope or a scanning electron microscope or the like.

The early strength enhancer for hydraulic compositions of the present invention may contain secondary particles into which calcite of component (a) aggregates. In the present invention, the term "secondary particles" means particles isolated from other particles, into which the primary particles or the primary aggregates of calcite aggregate while sharing part of their respective edges (particle interface) with one another.

An average secondary particle size of calcite of component (a) is preferably 1 μm or more, more preferably 1.5 μm or more, and further preferably 2.0 μm or more, and preferably 20 μm or less, more preferably 15 μm or less, further preferably 10 μm or less, and furthermore preferably 5 μm or less from the viewpoint of high early strength of hydraulic compositions.

The average secondary particle size of calcite of component (a) can be measured by using a laser diffraction/-scattering particle size distribution measurement device (for example, the laser diffraction/scattering particle size distribution measurement device LA-920 manufactured by HORIBA, Ltd.)

In the present invention, the average secondary particle size is preferably measured by using water as the dispersing medium. Further, the particles are preferably subjected to ultrasonication so as to be fully dispersed in the dispersing medium.

The secondary particles of calcite of component (a) are preferably spherical from the viewpoint of high early strength of hydraulic compositions. Spherical may mean not only perfectly spherical but also ellipsoidal, substantially spherical, or those having fine pores or uneven spots on the surface, and means those with a ratio of the short diameter to the long diameter of 1:1 to 1:2. The primary particles of calcite linking together to form chains are not considered spherical. The shape of the secondary particles of calcite can be observed by a transmission electron microscope or a scanning electron microscope or the like.

Examples of methods for producing calcite of component (a) include the method below.

Calcium hydroxide, a compound other than calcium hydroxide, and water are mixed to prepare a water dispersion, and carbon dioxide gas is introduced into the water dispersion under a fixed water temperature condition until the pH reaches 7 to produce calcite of calcium carbonate.

Examples of the compound other than calcium hydroxide include barium hydroxide and hydroxides of other alkaline earth metals (excluding a magnesium salt), lithium sulfate, sodium sulfate, potassium sulfate, calcium sulfate, aluminum sulfate, alum, and other sulfates (excluding a magnesium salt and a zinc salt), magnesium hydroxide, magnesium sulfate, magnesium chloride, magnesium nitrate, magnesium acetate, and other magnesium salts, zinc sulfate, zinc chloride, zinc nitrate, and other zinc salts, acetic acid, citric acid, gluconic acid, and other organic acids, and salts thereof, polyacrylic acid and other macromolecular organic acids, and salts thereof, or the like, and one or more of these can be used. The compound other than calcium hydroxide is preferably one or more selected from magnesium hydroxide, sodium sulfate, magnesium sulfate, and zinc sulfate, more preferably one or more selected from sodium sulfate and magnesium hydroxide, and further preferably magnesium hydroxide from the viewpoint of the crystallite size of calcite to be produced.

Here, a mass ratio of a mixing amount of calcium hydroxide to a mixing amount of the compound other than calcium hydroxide in the water dispersion (calcium hydroxide/compound other than calcium hydroxide) is preferably 10 or more, more preferably 30 or more, and further preferably 50 or more, and preferably 100 or less and more preferably 80 or less from the viewpoint of the crystallite size of calcite to be produced.

Calcite of component (a) is preferably produced by the method below.

In other words, the present invention relates to a method for producing (a) calcite with a crystallite size in the (104) plane calculated by the Scherrer equation of 30 nm or less including the following step 1, step 2, and step 3,

step 1: a step of mixing calcium hydroxide, water, and the following component (c) at a mass ratio of a mixing amount of calcium hydroxide to a mixing amount of component (c) (calcium hydroxide/(c)) of 10 or more and 100 or less to prepare a water dispersion of calcium hydroxide,
component (c): one or more compounds selected from hydroxides of alkaline earth metals, sulfates, magnesium salts, zinc salts, organic acids and salts thereof, and polyacrylic acid and salts thereof,
step 2: a step of blowing carbon dioxide gas into the water dispersion prepared in step 1 while keeping the water dispersion at 7°C or more and 30°C or less to produce a calcite water dispersion, and
step 3: a step of aging, storing, or drying the calcite water dispersion obtained in step 2 at 40°C or less.

In step 1, specific examples of component (c) include barium hydroxide and hydroxides of other alkaline earth metals (excluding a magnesium salt), lithium sulfate, sodium sulfate, potassium sulfate, calcium sulfate, aluminum sulfate, alum, and other sulfates (excluding a magnesium salt and a zinc salt), magnesium hydroxide, magnesium sulfate, magnesium chloride, magnesium nitrate, magnesium acetate, and other magnesium salts, zinc sulfate, zinc chloride, zinc nitrate, and other zinc salts, acetic acid, citric acid, gluconic acid, and other organic acids, and salts thereof, polyacrylic acid and other macromolecular organic acids, and salts thereof, or the like, and one or more of these can be used.

Component (c) is preferably one or more selected from magnesium hydroxide, sodium sulfate, magnesium sulfate, and zinc sulfate, more preferably one or more selected from sodium sulfate and magnesium hydroxide, and further preferably magnesium hydroxide from the viewpoint of the crystallite size of calcite to be produced.

In step 1, when calcium hydroxide, component (c), and water are mixed to prepare the water dispersion of calcium hydroxide, a mixing amount of component (c) relative to a mixing amount of calcium hydroxide in the water dispersion is 0.001 mass% or more, preferably 0.01 mass% or more, and more preferably 0.1 mass% or more, and 4 mass% or less, preferably 2.5 mass% or less, more preferably 2.3 mass% or less, and further preferably 2.0 mass% or less from the viewpoint of the shape and stability of calcite particles to be produced.

Further, when the water dispersion is prepared, a mixing amount of water relative to a mixing amount of calcium hydroxide in the water dispersion is preferably 1500 mass% or more and more preferably 1800 mass% or more, and preferably 2500 mass% or less and more preferably 2000 mass% or less.

Further, when the water dispersion is prepared, a mass ratio of a mixing amount of calcium hydroxide to a mixing amount of component (c) (calcium hydroxide/(c)) is preferably 10 or more, more preferably 30 or more, and further preferably 50 or more, and preferably 100 or less and more preferably 80 or less from the viewpoint of the crystallite size of calcite to be produced.

In step 2, carbon dioxide gas is blown into the water dispersion prepared in step 1 while keeping the water dispersion at 10°C or more, preferably 12°C or more, and more preferably 14°C or more, and 30°C or less, preferably 25°C or less, and more preferably 20°C or less to produce the calcite water dispersion from the viewpoint of the size and stability of calcite particles to be produced. The carbon dioxide gas blown into the water dispersion may be blown as a mixed gas containing an inert gas such as nitrogen or the like, and it is preferable that a proportion of carbon dioxide gas in the blown gas be 10 volume% or more, preferably 20 volume% or more, and more preferably 50 volume% or more, and preferably

100 volume% or less from the viewpoint of the size and shape of calcite particles to be produced. The blown carbon dioxide gas is preferably blown until the pH of the water dispersion reaches 7.

In step 3, the calcite water dispersion obtained in step 2 is aged, stored, or dried at an environmental temperature of 40°C or less, preferably 35°C or less, and more preferably 30°C or less from the viewpoint of the shape of the primary aggregates of calcite. The time during which it is aged, stored, or dried is preferably 60 minutes or more and more preferably 120 minutes or more, and preferably 48 hours or less and more preferably 24 hours or less from the viewpoint of the shape of the primary aggregates of calcite.

The early strength enhancer for hydraulic compositions of the present invention contains component (a) in the composition in an amount of preferably 20 mass% or more, more preferably 25 mass% or more, and further preferably 30 mass% or more from the viewpoint of the storage stability of the composition, and preferably 100 mass% or less, more preferably 60 mass% or less, and further preferably 50 mass% or less from the viewpoint of ease of handling the composition.

The early strength enhancer for hydraulic compositions of the present invention may be composed of component (a).

In other words, the present invention may be an early strength enhancer for hydraulic compositions composed of component (a).

The early strength enhancer for hydraulic compositions of the present invention can further contain a dispersant as component (b) from the viewpoints of ease of handling hydraulic compositions, and dispersing component (a) to achieve high early strength of hydraulic compositions.

The dispersant of component (b) is preferably one or more compounds selected from naphthalene-based polymers, polycarboxylic acid-based polymers, lignin sulfonic acid-based polymers, melamine-based polymers, polymers containing a phosphoric acid group in the structures, and polymers containing an aromatic compound having a polyalkyleneoxy group.

Examples of the naphthalene-based polymers include, for example, polymers obtained by condensation polymerization. Specific examples include, for example, polymers obtained by addition condensation with aldehydes, typically, formaldehyde condensation, of naphthalene-based compounds. The naphthalene-based polymers are preferably aldehyde condensation polymers and more preferably formaldehyde condensation polymers.

Preferable examples of the naphthalene-based polymers include naphthalene sulfonic acid formaldehyde condensates or salts thereof. The naphthalene sulfonic acid formaldehyde condensates or the salts thereof are condensates of naphthalene sulfonic acids and formaldehyde or salts thereof. The naphthalene sulfonic acid formaldehyde condensates may be co-condensed as monomers with aromatic compounds co-condensable with naphthalene sulfonic acids, such as, for example, methyl naphthalene, ethyl naphthalene, butyl naphthalene, hydroxy naphthalene, naphthalene carboxylic acid, anthracene, phenol, cresol, creosote oil, tar, melamine, urea, sulfanilic acid, and/or derivatives of these, and others unless performance is impaired.

Commercially available products of naphthalene sulfonic acid formaldehyde condensates or salts thereof, such as, for example, MIGHTY 150, DEMOL N, DEMOL RN, DEMOL MS, DEMOL SN-B, and DEMOL SS-L (which are all manufactured by Kao Corporation), and CELLFLOW 120, LAVELIN FD-40, and LAVELIN FM-45 (which are all manufactured by DKS Co. Ltd.), or the like can be used.

The naphthalene sulfonic acid formaldehyde condensates or the salts thereof have a weight average molecular weight of preferably 200,000 or less, more preferably 100,000 or less, further preferably 80,000 or less, furthermore preferably 50,000 or less, and furthermore preferably 30,000 or less from the viewpoint of improving the fluidity of hydraulic compositions. Further, the naphthalene sulfonic acid formaldehyde condensates or the salts thereof have a weight average molecular weight of preferably 1,000 or more, more preferably 3,000 or more, further preferably 4,000 or more, and furthermore preferably 5,000 or more from the viewpoint of improving the fluidity of hydraulic compositions. The naphthalene sulfonic acid formaldehyde condensates may be in acid states or neutralized products.

The molecular weight of the naphthalene sulfonic acid formaldehyde condensates or the salts thereof can be measured by using gel permeation chromatography under the conditions below.

[GPC conditions]

Column: G4000SWXL + G2000SWXL (Tosoh Corporation)
Eluent: 30 mM $CH_3COONa/CH_3CN$ = 6/4
Flow rate: 0.7 ml/min
Detection: UV 280 nm
Sample size: 0.2 mg/ml
Standard substance: in terms of sodium polystyrene sulfonate manufactured by Nishio Kogyo Co., Ltd. (monodisperse sodium polystyrene sulfonate with molecular weights of 206, 1,800, 4,000, 8,000, 18,000, 35,000, 88,000, and 780,000)
Detector: UV-8020 from Tosoh Corporation

As the polycarboxylic acid-based polymers, copolymers of a monoester of a polyalkylene glycol and (meth)acrylic acid and a carboxylic acid such as (meth)acrylic acid or the like (for example, compounds described in JP-A H8-12397 or the like), copolymers of an unsaturated alcohol having a polyalkylene glycol and a carboxylic acid such as (meth)acrylic acid or the like, copolymers of an unsaturated alcohol having a polyalkylene glycol and a dicarboxylic acid such as maleic acid or the like, and others can be used. Here, (meth)acrylic acid means a carboxylic acid selected from acrylic acid and methacrylic acid.
Examples of the polycarboxylic acid-based polymers (hereinafter also referred to as (b1)) include copolymers containing monomer (11b) represented by the following general formula (11b) and monomer (12b) represented by the following general formula (12b) as constituent monomers:

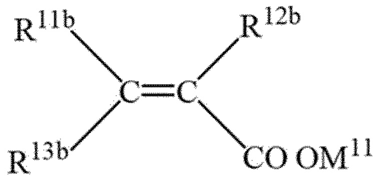
(11b)

wherein

$R^{11b}$, $R^{12b}$, and $R^{13b}$ may be the same or different and each represent a hydrogen atom, a methyl group, or $(CH_2)_rCOOM^{12}$, and $(CH_2)_rCOOM^{12}$ may form an anhydride with $COOM^{11}$ or another $(CH_2)_rCOOM^{12}$, and in that case, $M^{11}$ and $M^{12}$ in those groups are not present,
$M^{11}$ and $M^{12}$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and
r represents a number of 0 or more and 2 or less; and

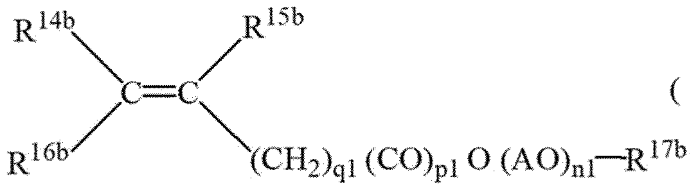
(12b)

wherein
$R^{14b}$, $R^{15b}$, and $R^{16b}$ may be the same or different and each represent a hydrogen atom, a methyl group, $(CH_2)_sCOOM^{13}$, or $(CH_2)_{q1}(CO)_{p1}O(AO)_{n1}$-$R^{17b}$,
$R^{17b}$ is a hydrogen atom or an alkyl group with 1 or more and 4 or less carbons,
AO is an alkyleneoxy group with 2 or more and 4 or less carbons,
n1 is an average number of added moles of AO and a number of 4 or more and 200 or less,
q1 is a number of 0 or more and 2 or less,
p1 is 0 or 1,
$M^{13}$ is a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and
s represents a number of 0 or more and 2 or less.

In the general formula (11b), $R^{11b}$ is preferably a hydrogen atom from the viewpoint of availability. In the general formula (11b), $R^{12b}$ is preferably a hydrogen atom or a methyl group from the viewpoint of availability.
In the general formula (11b), $R^{13b}$ is preferably a hydrogen atom from the viewpoint of availability.

$(CH_2)_rCOOM^{12}$ may form an anhydride with $COOM^{11}$ or another $(CH_2)_rCOOM^{12}$, and in that case, $M^{11}$ and $M^{12}$ in those groups are not present.
$M^{11}$ and $M^{12}$ may be the same or different and each represent a hydrogen atom, an alkali metal, an alkaline earth metal (1/2 atom), an ammonium group, an alkyl ammonium group, a substituted alkyl ammonium group, an alkyl group, a

hydroalkyl group, or an alkenyl group.

The alkyl groups, the hydroalkyl groups, and the alkenyl groups of $M^{11}$ and $M^{12}$ each preferably have 1 or more and 4 or less carbons.

$M^{11}$ and $M^{12}$ may be the same or different and each represent preferably a hydrogen atom, an alkali metal, an alkaline earth metal (1/2 atom), an ammonium group, or an alkyl ammonium group, more preferably a hydrogen atom, an alkali metal, an alkaline earth metal (1/2 atom), or an ammonium group, further preferably a hydrogen atom, an alkali metal, or an alkaline earth metal (1/2 atom), and furthermore preferably a hydrogen atom or an alkali metal.

In the general formula (11b), r in $(CH_2)_rCOOM^{12}$ is preferably 0.

In the general formula (12b), $R^{14b}$ is preferably a hydrogen atom from the viewpoint of availability.

In the general formula (12b), $R^{15b}$ is preferably a hydrogen atom or a methyl group and more preferably a methyl group from the viewpoints of availability, and dispersibility in calcium carbonate slurries and hydraulic compositions.

In the general formula (12b), $R^{16b}$ is preferably a hydrogen atom from the viewpoint of availability.

In the general formula (12b), $R^{17b}$ is preferably a hydrogen atom or a methyl group and more preferably a methyl group from the viewpoint of availability.

In the general formula (12b), AO is preferably a group selected from an ethyleneoxy group and a propyleneoxy group and more preferably an ethyleneoxy group from the viewpoint of dispersibility in calcium carbonate slurries and hydraulic compositions. AO preferably contains an ethyleneoxy group.

In the general formula (12b), n1 is an average number of added moles of AO, and preferably 4 or more, more preferably 20 or more, further preferably 50 or more, and furthermore preferably 80 or more, and preferably 150 or less, more preferably 130 or less, and further preferably 120 or less from the viewpoint of dispersibility in calcium carbonate slurries and hydraulic compositions.

In the general formula (12b), q1 is preferably 0, 1, or 2, more preferably 0 or 1, and further preferably 0 from the viewpoint of dispersibility in calcium carbonate slurries and hydraulic compositions.

In the general formula (12b), p1 is preferably 1 from the viewpoint of dispersibility in calcium carbonate slurries and hydraulic compositions.

In the general formula (12b), $M^{13}$ is a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group.

The alkyl group, the hydroalkyl group, and the alkenyl group of $M^{13}$ each preferably have 1 or more and 4 or less carbons.

$M^{13}$ is preferably a hydrogen atom, an alkali metal, an alkaline earth metal (1/2 atom), an ammonium group, or an alkyl ammonium group, more preferably a hydrogen atom, an alkali metal, an alkaline earth metal (1/2 atom), or an ammonium group, further preferably a hydrogen atom, an alkali metal, or an alkaline earth metal (1/2 atom), and furthermore preferably a hydrogen atom or an alkali metal.

In the general formula (12b), s in $(CH_2)_sCOOM^{13}$ is preferably 0.

A proportion of monomer (11b) in a total amount of monomer (11b) and monomer (12b) in all constituent monomers of copolymer (b1) is preferably 1 mass% or more, more preferably 5 mass% or more, further preferably 10 mass% or more, and furthermore preferably 15 mass% or more, and preferably 40 mass% or less, more preferably 30 mass% or less, further preferably 25 mass% or less, and furthermore preferably 20 mass% or less from the viewpoint of dispersibility in calcium carbonate slurries and hydraulic compositions.

A proportion of monomer (11b) in all constituent monomers of copolymer (b1) is preferably 1 mass% or more, more preferably 5 mass% or more, further preferably 10 mass% or more, and furthermore preferably 15 mass% or more, and preferably 40 mass% or less, more preferably 30 mass% or less, further preferably 25 mass% or less, and furthermore preferably 20 mass% or less from the viewpoint of dispersibility in calcium carbonate slurries and hydraulic compositions.

A total amount of monomer (11b) and monomer (12b) in all constituent monomers of copolymer (b1) is preferably 70 mass% or more, more preferably 80 mass% or more, and further preferably 90 mass% or more, and preferably 100 mass% or less from the viewpoint of dispersibility in calcium carbonate slurries and hydraulic compositions. This total amount may be 100 mass%.

A weight average molecular weight of copolymer (b1) is preferably 5,000 or more, more preferably 10,000 or more, further preferably 20,000 or more, and furthermore preferably 30,000 or more, and preferably 100,000 or less, more preferably 80,000 or less, further preferably 60,000 or less, and furthermore preferably 50,000 or less from the viewpoint of dispersibility in calcium carbonate slurries and hydraulic compositions.

The weight average molecular weight of the above copolymer is measured by a gel permeation chromatography (GPC) method under the conditions below.

*GPC conditions

Instrument: GPC (HLC-8320GPC) manufactured by Tosoh Corporation
Column: G4000PWXL + G2500PWXL (manufactured by Tosoh Corporation)
Eluent: 0.2 M phosphate buffer/$CH_3CN$ = 9/1
Flow rate: 1.0 mL/min
Column temperature: 40°C
Detection: RI
Sample size: 0.2 mg/mL
Standard substance: in terms of polyethylene glycol (monodisperse polyethylene glycol with known molecular weights, molecular weights of 87,500, 250,000, 145,000, 46,000, and 24,000)

In addition to monomer (11b) and monomer (12b), copolymer (b1) may optionally have one or more monomers (13b) copolymerizable with monomer (11b) and/or monomer (12b). Examples of monomer (13b) include acrylate esters. A total of monomer (11b) and monomer (12b) or a total of monomer (11b), monomer (12b), and monomer (13b) in all constituent units of copolymer (b1) may be 100 mass%.

Examples of the lignin sulfonic acid-based polymers include lignin sulfonates or derivatives thereof. Commercially available products of lignin sulfonates or derivatives thereof can be used. Examples include MasterPozzolith No. 70 and MasterPolyheed 15S series from Pozzolith Solutions Ltd., FLOWRIC S series and FLOWRIC R series from Flowric Co., Ltd., Darlex WRDA from Grace Chemical Co., Ltd., Plastocrete NC and Plastocrete R from Sika Japan Ltd., Yamaso 80P, Yamaso 90 series, Yamaso 98 series, Yamaso 02NL-P, Yamaso 02NLR-P, Yamaso 09NL-P, and Yamaso NLR-P from YAMASO CHEMICAL Co., Ltd., Chupol EX60 series and Chupol LS-A series from TAKEMOTO OIL & FAT CO., LTD., LIG ACE UA series, LIG ACE UR series, and LIG ACE VF series from LIG ACE CORPORATION, and others.

Specific examples of the lignin sulfonates or the derivatives thereof include the following:

(I) alkali metal salts, alkaline earth metal salts, ammonium salts, or amine salts of lignin sulfonic acid;
(II) lignin derivatives obtained by introducing amine compounds or amino groups into lignin sulfonates (for example, JP-A 2016-108183);
(III) lignin derivatives obtained by reacting lignin sulfonates with formaldehyde (for example, JP-A 2015-229764);
(IV) modified lignins such as oxidized lignin, sulfonated lignin, and others (for example, JP-A 2003-2714);
(V) lignin sulfonic acid compound and polyol combinations (for example, JP-A 2007-105899);
(VI) modified lignin sulfonate products of the following 1) to 3) (for example, JP-A 2007-261119),

1) modified lignin sulfonate products obtained by graft copolymerization of lignin sulfonic acid or salts thereof and acrylic-based monomers having functional groups,
2) modified lignin sulfonate products obtained by graft copolymerization of lignin sulfonic acid or salts thereof and vinyl-based monomers having functional groups, and
3) modified lignin sulfonate products obtained by adding naphthalene sulfonate formaldehyde condensates to lignin sulfonic acid or salts thereof;

(VII) lignin derivatives obtained by introducing polyalkylene glycol compounds to lignin sulfonates (for example, JP-A 2015-193804);
(VIII) reaction products of lignin sulfonic acid-based compounds with water-soluble monomers (for example, JP-A 2011-240224),

wherein examples of the lignin sulfonic acid-based compounds include compounds having backbones with a sulfone group introduced by cleavage at carbon in the $\alpha$-position of a side chain of the hydroxyphenylpropane structure of lignin, and
wherein examples of the water-soluble monomers include, for example, compounds having at least one or more ionic functional groups such as a carboxyl group, a hydroxyl group, a sulfone group, a nitroxyl group, a carbonyl group, a phosphoric acid group, an amino group, an epoxy group or the like, or other polar groups; and

(IX) lignin sulfonic acid derivatives of the following 4) to 5) (for example, JP-A 2015-212216),

(4) lignin derivatives obtained by reacting at least one water-soluble monomer with functional groups such as a phenolic hydroxyl group, an alcoholic hydroxyl group, a thiol group or the like contained in lignin sulfonic acid-based compounds, and
(5) lignin derivatives obtained by radical copolymerization of at least one water-soluble monomer with lignin sulfonic acid-based compounds (usually with functional groups of the compounds) using radical initiators,

wherein examples of the lignin sulfonic acid-based compounds are not particularly limited, but include those obtained by cooking wood by the sulfite process,
wherein examples of water-soluble monomers that can react with a phenolic hydroxyl group and/or an alcoholic hydroxyl group contained in the lignin sulfonic acid-based compounds, of the water-soluble monomers, include alkylene oxides such as ethylene oxide, propylene oxide or the like, and others,
wherein examples of water-soluble monomers that can react with a thiol group contained in the lignin sulfonic acid-based compounds, of the water-soluble monomers, include alkylene oxides such as ethylene oxide, propylene oxide or the like, alkylene imines such as ethylene imine, propylene imine or the like, and others, and
wherein examples of the water-soluble monomers used in the radical copolymerization include monomers described in paragraphs [0071] to [0074] of JP-A 2015-212216, specifically, acrylic acid, methacrylic acid, adducts of 1 to 500 moles of C2-18 alkylene oxides to (meth)acrylic acid, alkylene oxide adduct compounds obtained by adding 2 to 300 moles of alkylene oxides to allyl alcohol, and others.

Examples of the melamine-based polymers include, for example, melamine sulfonic acid formaldehyde condensates or salts thereof. The melamine sulfonic acid formaldehyde condensates or the salts thereof are compounds obtained by reacting bisulfite with N-methylolated melamine obtained by reacting formaldehyde with melamine, thereby sulfomethylating some of the methylol groups, then adding acids to dehydrate and condense the methylol groups, thereby producing formaldehyde condensates, and neutralizing the same with alkalis (see, for example, JP-B S63-37058). Examples of the alkalis can include hydroxides of alkali metals or alkaline earth metals, ammonia, mono-, di-, and trialkyl (C2-8) amines, mono-, di-, and trialkanol (C2-8) amines, and others.
Commercially available products of melamine sulfonic acid formaldehyde condensates or salts thereof include MIGHTY 150V-2 (manufactured by Kao Corporation), SMF-PG (manufactured by Nissan Chemical Industries, Ltd.), Melflow (manufactured by Mitsui Chemicals, Inc.), Melment F-10 (manufactured by Showa Denko K.K.), Super Melamine (manufactured by Nissan Chemical Corporation), Flowric MS (manufactured by Flowric Co., Ltd.), and Melment F4000, Melment F10M, and Melment F245 (which are all manufactured by Pozzolith Solutions Ltd.) or the like.
The melamine sulfonic acid formaldehyde condensates have a molecular weight of preferably 1,000 or more and more preferably 5,000 or more, and preferably 100,000 or less, more preferably 50,000 or less, and further preferably 20,000 or less (in terms of a polystyrene sulfonate measured by a gel permeation chromatography method).
As the polymers containing a phosphoric acid group in the structures (hereinafter also referred to as (b2)), copolymers of a monoester of a polyalkylene glycol and (meta)acrylic acid and a monoester and a diester of hydroxyethyl (meta)acrylate and phosphoric acid or the like (for example, JP-A), and others can be used.
(b2) is preferably copolymers containing monomer (21b) represented by the following general formula (21b), monomer (22b) represented by the following general formula (22b), and monomer (23b) represented by the following general formula (23b) as constituent monomers:

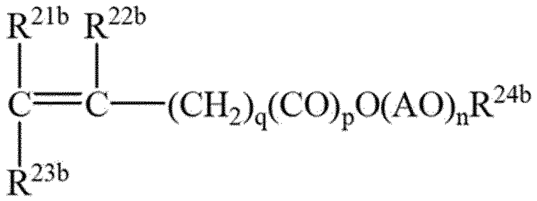
(21b)

wherein $R^{21b}$ and $R^{22b}$ each represent a hydrogen atom or a methyl group, $R^{23b}$ is a hydrogen atom or - $(CH_2)_q(CO)_pO(AO)_nR^{24b}$, AO is an oxyalkylene group with 2 or more and 4 or less carbons or an oxystyrene group, p is a number of 0 or 1, q is a number of 0 or more and 2 or less, n is an average number of added moles of AO and a number of 10 or more and 150 or less, and $R^{24b}$ represents a hydrogen atom or an alkyl group with 1 or more and 18 or less carbons;

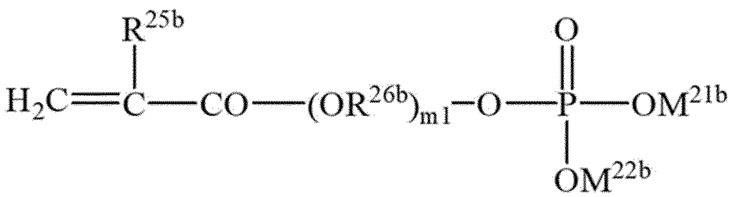
(22b)

wherein $R^{25b}$ is a hydrogen atom or a methyl group, $R^{26b}$ is an alkylene group with 2 or more and 12 or less carbons, m1 is a number of 1 or more and 30 or less, and $M^{21b}$ and $M^{22b}$ each represent a hydrogen atom, an alkali metal, or an alkaline earth metal (1/2 atom); and

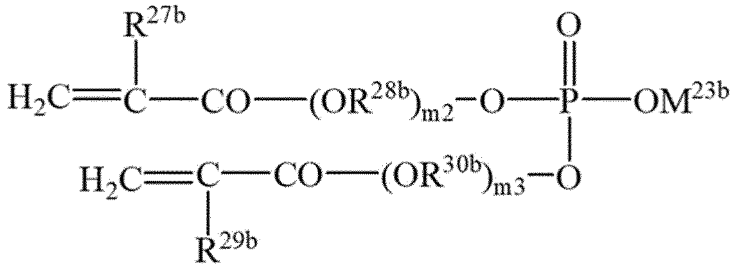

(23b)

wherein $R^{27b}$ and $R^{29b}$ each represent a hydrogen atom or a methyl group, $R^{28b}$ and $R^{30b}$ each represent an alkylene group with 2 or more and 12 or less carbons, m2 and m3 each represent a number of 1 or more and 30 or less, and $M^{23b}$ represents a hydrogen atom, an alkali metal, or an alkaline earth metal (1/2 atom).

In monomer (21b) of the general formula (21b), $R^{21b}$ and $R^{22b}$ each represent a hydrogen atom or a methyl group. $R^{23b}$ is a hydrogen atom or $-(CH_2)_q(CO)_pO(AO)R^{24b}$ and preferably a hydrogen atom. $R^{24b}$ is a hydrogen atom or an alkyl group with 1 or more and 18 or less carbons, preferably an alkyl group with further 12 or less and further 4 or less carbons, preferably a methyl group or an ethyl group, and further preferably a methyl group. AO (oxyalkylene group) forms an ether bond with $(CH_2)_q$ if p is 0 and forms an ester bond with $(CH_2)_q$ if p is 1. q is 0 or more and 2 or less, preferably 0 or 1, and further preferably 0. AO is an oxyalkylene group with 2 or more and 4 or less carbons or an oxystyrene group, and AO is preferably an oxyalkylene group with 2 or more and 4 or less carbons, and more preferably contains an ethyleneoxy group (hereinafter, EO group).

n is an average number of added moles of AO, and a number of preferably 15 or more and more preferably 20 or more, and preferably 100 or less, more preferably 75 or less, further preferably 50 or less, furthermore preferably 40 or less, and furthermore preferably 30 or less from the viewpoint of dispersibility in hydraulic compositions. Further, in an average of n repeating units, different types of AO added at random or added in blocks or a mixture of these may be contained. It is preferable that 70 mol% or more, further 80 mol% or more, and further 90 mol% or more of AO be EO groups, and further, all the AO groups be EO groups. In addition to EO, AO can also contain, for example, a propyleneoxy group, a butyleneoxy group or the like.

As monomer (21b), a (half) esterified product with (meth)acrylic acid or maleic acid, an etherified product with (meth)allyl alcohol, and a C2-4 alkylene oxide adduct with (meth)acrylic acid, maleic acid, or (meth)allyl alcohol, of a polyalkylene glycol terminated with an alkyl at one end such as methoxy polyethylene glycol, methoxy polypropylene glycol, methoxy polybutylene glycol, methoxy polystyrene glycol, ethoxy polyethylene polypropylene glycol or the like, are preferably used. Note that (meth)acrylic acid means acrylic acid and/or methacrylic acid, and (meth)allyl means allyl and/or methallyl (the same applies hereinafter).

Monomer (21b) is an esterified product of preferably an alkoxy polyethylene glycol and more preferably methoxy polyethylene glycol with (meth)acrylic acid. Specific examples can include ω-methoxy polyoxyalkylene methacrylates, ω-methoxy polyoxyalkylene acrylates, and others, and ω-methoxy polyoxyalkylene methacrylates are more preferable. ω-methoxy polyoxyethylene methacrylate is further preferable.

In monomer (22b) of the general formula (22b), $R^{25b}$ is a hydrogen atom or a methyl group, and $R^{26b}$ is an alkylene group with 2 or more and 12 or less carbons. m1 is a number of 1 or more and 30 or less, and $M^{21b}$ and $M^{22b}$ each represent a hydrogen atom, an alkali metal, or an alkaline earth metal (1/2 atom). The alkylene group of $R^{26b}$ in the general formula (22b) has preferably 10 or less, more preferably 8 or less, further preferably 6 or less, furthermore preferably 4 or less, and furthermore preferably 2 carbons. m1 in the general formula (22b) is preferably 20 or less, more preferably 10 or less, further preferably 5 or less, furthermore preferably 3 or less, and furthermore preferably 1.

Examples of monomer (22b) include phosphoric acid monoesters of organic hydroxy compounds. Specific examples include polyalkylene glycol mono(meth)acrylic acid phosphoric acid esters, and others. Further, examples include compounds selected from phosphoric acid mono-[(2-hydroxyethyl) methacrylic acid] ester and phosphoric acid mono-[(2-hydroxyethyl) acrylic acid] ester. Especially, phosphoric acid mono-[(2-hydroxyethyl) methacrylic acid] ester is preferable from the viewpoints of ease of production and stability of product quality. Further, alkali metal salts, alkaline earth metal salts, ammonium salts, alkyl ammonium salts, or the like of these compounds may be possible.

In monomer (23b) of the general formula (23b), $R^{27b}$ and $R^{29b}$ each represent a hydrogen atom or a methyl group, and $R^{28b}$ and $R^{30b}$ each represent an alkylene group with 2 or more and 12 or less carbons. m2 and m3 each represent a number of 1 or more and 30 or less, and $M^{23b}$ is a hydrogen atom, an alkali metal, or an alkaline earth metal (1/2 atom). The alkylene groups of $R^{28b}$ and $R^{30b}$ in the general formula (23b) each have preferably 10 or less, more preferably 8 or less,

further preferably 6 or less, furthermore preferably 4 or less, and furthermore preferably 2 carbons. m2 and m3 in the general formula (23b) each represent preferably 20 or less, more preferably 10 or less, further preferably 5 or less, furthermore preferably 3 or less, and furthermore preferably 1.

Examples of monomer (23b) include phosphoric acid diesters of organic hydroxy compounds. Specific examples include polyalkylene glycol di(meth)acrylic acid phosphoric acid diesters, and others. Further, examples include compounds selected from phosphoric acid di-[(2-hydroxyethyl) methacrylic acid] ester and phosphoric acid di-[(2-hydroxyethyl) acrylic acid] ester. Especially, phosphoric acid di-[(2-hydroxyethyl) methacrylic acid] ester is preferable from the viewpoints of ease of production and stability of product quality. Further, alkali metal salts, alkaline earth metal salts, ammonium salts, alkyl ammonium salts, or the like of these compounds may be possible.

A proportion of monomer (21b) in constituent monomers of (b2) is preferably 45 mass% or more, more preferably 55 mass% or more, further preferably 65 mass% or more, and furthermore preferably 70 mass% or more, and preferably 90 mass% or less, more preferably 87 mass% or less, further preferably 85 mass% or less, and furthermore preferably 82 mass% or less.

A total proportion of monomer (22b) and monomer (23b) in constituent monomers of (b2) is preferably 14.5 mass% or more, more preferably 15.0 mass% or more, and further preferably 20 mass% or more, and preferably 50 mass% or less, more preferably 40 mass% or less, further preferably 30 mass% or less, and furthermore preferably 25 mass% or less.

A total proportion of monomer (21b), monomer (22b), and monomer (23b) in constituent monomers of (b2) is preferably 80 mass% or more, more preferably 90 mass% or more, and further preferably 95 mass% or more, and preferably 100 mass% or less, more preferably 98.5 mass% or less, and further preferably 98.3 mass% or less.

A weight average molecular weight (Mw) of (b2) is preferably 25,000 or more, more preferably 30,000 or more, further preferably 35,000 or more, furthermore preferably 40,000 or more, furthermore preferably 50,000 or more, and furthermore preferably 60,000 or more, and preferably 100,000 or less, more preferably 85,000 or less, further preferably 80,000 or less, furthermore preferably 75,000 or less, and furthermore preferably 70,000 or less.

(b2) preferably has the above Mw and an Mw/Mn of 1.0 to 2.6. Here, Mn is a number average molecular weight.

The Mw and Mn of (b2) are measured by a gel permeation chromatography (GPC) method under the conditions below.

[GPC conditions]

Column: G4000PWXL + G2500PWXL (Tosoh Corporation)
Eluent: 0.2 M phosphate buffer/$CH_3CN$ = 9/1
Flow rate: 1.0 mL/min
Column temperature: 40°C
Detection: RI
Sample size: 0.5 mg/mL
Standard substance for the preparation of calibration curves: in terms of polyethylene glycol (with weight average molecular weights of 258,000, 185,000, 101,000, 21,000, 12,600, 6,450, and 1,420)

(b2) can be produced, for example, by a method described in JP-A 2015-113248.

The polymers containing an aromatic compound having a polyalkyleneoxy group (hereinafter also referred to as (b3)) are polymers containing a monomer unit having a group selected from a carboxylic acid group and a phosphoric acid group and a monomer unit having a polyalkyleneoxy group. (b3) is compounds obtained by addition polymerization or condensation polymerization. Examples of the addition polymerization include techniques for reacting monomers having an unsaturated bond, such as radical polymerization, ion polymerization, and others. Examples of the condensation polymerization include addition condensation with aldehydes, typically, formaldehyde condensation, of aromatic compounds, and others. A method for synthesizing (b3) is preferably aldehyde condensation polymerization and more preferably formaldehyde condensation polymerization.

Polymer (b3) containing an aromatic compound having a polyalkyleneoxy group is preferably copolymers containing the following monomer (31b), monomer (32b), and monomer (33b) as constituent monomers.

Examples of monomer (31b) include monomers obtained from one or more compounds selected from benzene compounds which have a polyalkyleneoxy group and may have a substituent other than a polyalkyleneoxy group, and naphthalene compounds which have a polyalkyleneoxy group and may have a substituent other than a polyalkyleneoxy group, and monomers obtained from benzene compounds which have a polyalkyleneoxy group and may have a substituent other than a polyalkyleneoxy group are preferable. Examples of the substituent other than a polyalkyleneoxy group include one or more selected from alkyl groups with 1 or more and 4 or less carbons, alkenyl groups with 2 or more

and 4 or less carbons, a hydroxyl group, and halogeno groups.

In monomer (31b), the alkyleneoxy group is preferably an alkyleneoxy group with 2 or more and 3 or less carbons and more preferably an ethyleneoxy group. In monomer (31b), an average number of added moles of the alkyleneoxy group is 5 or more, preferably 10 or more, more preferably 20 or more, further preferably 35 or more, furthermore preferably 37 or more, furthermore preferably 42 or more, furthermore preferably 50 or more, and furthermore preferably 70 or more, and 300 or less, preferably 200 or less, more preferably 150 or less, further preferably 110 or less, and furthermore preferably 90 or less from the viewpoint of dispersibility. In monomer (31b), an average number of added moles of the alkyleneoxy group is 5 or more, preferably 10 or more, more preferably 20 or more, further preferably 30 or more, and furthermore preferably 35 or more, and 300 or less, preferably 200 or less, more preferably 150 or less, further preferably 110 or less, furthermore preferably 90 or less, furthermore preferably 70 or less, and furthermore preferably 50 or less from the viewpoint of the initial strength of hydraulic compositions.

From the viewpoint of dispersibility, monomer (31b) is preferably a monomer obtained from a compound represented by the following general formula (31b):

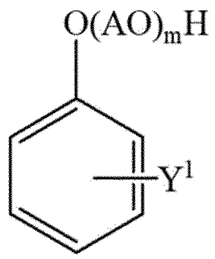

(31b)

wherein AO is an alkyleneoxy group, m is an average number of added moles of the alkyleneoxy group and a number of 5 or more and 300 or less, and $Y^1$ is an optional substituent of the benzene ring and one or more selected from alkyl groups with 1 or more and 4 or less carbons, alkenyl groups with 2 or more and 4 or less carbons, a hydroxyl group, and halogeno groups.

In the general formula (31b), AO is preferably an alkyleneoxy group with 2 or more and 3 or less carbons and more preferably an ethyleneoxy group. In the general formula (31b), m is 5 or more, preferably 10 or more, more preferably 20 or more, further preferably 35 or more, furthermore preferably 37 or more, furthermore preferably 42 or more, furthermore preferably 50 or more, and furthermore preferably 70 or more, and 300 or less, preferably 200 or less, more preferably 150 or less, further preferably 110 or less, and furthermore preferably 90 or less from the viewpoint of dispersibility. In the general formula (31b), m is 5 or more, preferably 10 or more, more preferably 20 or more, further preferably 30 or more, and furthermore preferably 35 or more, and 300 or less, preferably 200 or less, more preferably 150 or less, further preferably 110 or less, furthermore preferably 90 or less, furthermore preferably 70 or less, and furthermore preferably 50 or less from the viewpoint of the initial strength of hydraulic compositions. In the general formula (31b), if the benzene ring has $Y^1$, $Y^1$ is preferably one or more selected from alkyl groups with 1 or more and 4 or less carbons and more preferably an alkyl group with 1 or more and 2 or less carbons. Further, the benzene ring may be free of $Y^1$.

Examples of monomer (31b) include monomer units obtained from one or more compounds selected from polyoxyalkylene phenyl ethers and polyoxyalkylene naphthyl ethers. A raw material compound of monomer (31b) is specifically a compound obtained by adding an average of 5 to 300 moles of an oxyalkylene group to phenol, cresol, nonylphenol, naphthalene, methylnaphthalene, butylnaphthalene, bisphenol or the like.

(b3) is preferably polymers further containing a monomer having a carboxylic acid group and an aromatic ring (hereinafter referred to as monomer (32b)) or a monomer having a phosphoric acid group and an aromatic ring (hereinafter referred to as monomer (33b)) from the viewpoint of dispersibility. In other words, (b3) is preferably polymers containing monomer (31b), and monomer (32b) or monomer (33b). Further, (b3) is more preferably formaldehyde condensation polymers containing monomer (31b) and monomer (32b), or formaldehyde condensation polymers containing monomer (31b) and monomer (33b), or formaldehyde condensation polymers containing monomer (31b), monomer (32b), and monomer (33b). Moreover, (b3) is further preferably formaldehyde condensation polymers containing monomer (31b) and monomer (33b).

Examples of the aromatic compound having a carboxylic acid group of monomer (32b) include monomers obtained from one or more compounds selected from benzene compounds which have a carboxylic acid group and may have a substituent other than a carboxylic acid group, and naphthalene compounds which have a carboxylic acid group and may have a substituent other than a carboxylic acid group, and monomers obtained from benzene compounds which have a carboxylic acid group and may have a substituent other than a carboxylic acid group are preferable.

The carboxylic acid group is a group selected from a carboxyl group and carboxyl groups in salt forms, and examples also include a carboxyl group that forms an anhydride with another carboxyl group.

Examples of the substituent other than a carboxylic acid group include one or more selected from alkyl groups

with 1 or more and 20 or less carbons, alkenyl groups with 2 or more and 4 or less carbons, a hydroxyl group, and halogeno groups.

From the viewpoint of dispersibility, monomer (32b) is preferably a monomer obtained from a compound represented by the following general formula (32b):

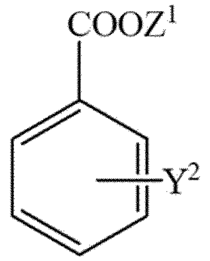

(32b)

wherein $Z^1$ is a hydrogen atom, an alkali metal, an alkaline earth metal (1/2 atom), an ammonium group, an alkyl ammonium group, or a substituted alkyl ammonium group, and $Y^2$ is an optional substituent of the benzene ring and one or more selected from alkyl groups with 1 or more and 20 or less carbons, alkenyl groups with 2 or more and 4 or less carbons, a hydroxyl group, and halogeno groups.

In the general formula (32b), $Z^1$ is preferably a hydrogen atom or an alkali metal and more preferably a hydrogen atom.

In the general formula (32b), if the benzene ring has $Y^2$, $Y^2$ is preferably one or more selected from a hydroxyl group and alkyl groups with 1 or more and 20 or less carbons and more preferably a hydroxyl group. Further, the benzene ring may be free of $Y^2$.

Examples of monomer (32b) include monomers obtained from one or more compounds selected from benzene or naphthalene derivatives, specifically, hydroxy benzoic acid, benzoic acid, isophthalic acid, oxynaphthoic acid, and isomers of these, and monomers obtained from one or more compounds selected from hydroxy benzoic acid and benzoic acid are preferable, and monomers obtained from hydroxy benzoic acid are more preferable from the viewpoint of fluidity.

Examples of the aromatic compound having a phosphoric acid group of monomer (33b) include monomers obtained from one or more compounds selected from benzene compounds which have a phosphoric acid group and may have a substituent other than a carboxylic acid group, and naphthalene compounds which have a phosphoric acid group and may have a substituent other than a phosphoric acid group, and monomers obtained from benzene compounds which have a phosphoric acid group and may have a substituent other than a phosphoric acid group are preferable.

The phosphoric acid group is a group selected from a phosphoric acid group and phosphoric acid groups in salt forms, and examples also include a phosphoric acid group dehydrated and condensed with another phosphoric acid group.

Examples of the substituent other than a phosphoric acid group include one or more selected from alkyl groups with 1 or more and 20 or less carbons, alkenyl groups with 2 or more and 4 or less carbons, a hydroxyl group, and halogeno groups.

The phosphoric acid group may be coordinated to the aromatic compound as a substituent, and may also be a phosphoric acid ester or a phosphoric acid diester of an aromatic alcohol.

Examples of monomer (33b) include monomers obtained from one or more compounds selected from benzene or naphthalene derivatives, specifically, phenylphosphonic acid, phenylphosphinic acid, naphthylphosphonic acid, naphthylphosphinic acid, phenylphosphates (mono-, di-, or triester, or a mixture thereof), phenoxyethanol phosphates (mono-, di-, or triester, or a mixture thereof), phenoxydiglycol phosphates (mono-, di-, or triester, or a mixture thereof), phenoxy(poly)alkylene glycol phosphates (mono-, di-, or triester, or a mixture thereof), naphthol phosphates (mono-, di-, or triester, or a mixture thereof), polyoxyalkylene naphthalate phosphates (mono-, di-, or triester, or a mixture thereof), and isomers of these, and monomers obtained from phenoxyethanol phosphates (mono-, di-, or triester, or a mixture thereof) are preferable from the viewpoint of fluidity.

In addition to monomer (31b), monomer (32b), and/or monomer (33b), (b3) may have other polymerizable monomers in the range that the effects of the present invention are not impaired. Examples of the monomers other than monomer (31b), monomer (32b), and monomer (33b) include, for example, monomers obtained from alkyl phenols such as phenol, cresol, and others, and monomers obtained from one or more compounds selected from benzene or naphthalene derivatives, specifically, benzene sulfonic acid, phenol sulfonic acid, naphthalene sulfonic acid, alkyl naphthalene sulfonic acids, and naphthol sulfonic acid.

If (b3) contains monomer (32b), a molar ratio of monomer (32b) to monomer (31b) in (b3), (32b)/(31b), is preferably 5/95 or more, more preferably 10/90 or more, further preferably 15/85 or more, furthermore preferably 20/80 or more, furthermore preferably 30/70 or more, furthermore preferably 40/60 or more, furthermore preferably 50/50 or more,

furthermore preferably 60/40 or more, furthermore preferably 70/30 or more, and furthermore preferably 72/28 or more, and preferably 95/5 or less, more preferably 90/10 or less, further preferably 80/20 or less, and furthermore preferably 77/23 or less from the viewpoint of fluidity retention performance.

A molar ratio of monomer (32b) to monomer (31b) in (b3), (32b)/(31b), is preferably 5/95 or more, more preferably 10/90 or more, further preferably 15/85 or more, furthermore preferably 20/80 or more, furthermore preferably 30/70 or more, furthermore preferably 40/60 or more, furthermore preferably 50/50 or more, furthermore preferably 60/40 or more, furthermore preferably 70/30 or more, furthermore preferably 72/28 or more, and furthermore preferably 77/23 or more, and preferably 95/5 or less, more preferably 90/10 or less, and further preferably 82/18 or less from the viewpoint of initial strength.

A molar ratio of monomer (32b) to monomer (31b) in (b3), (32b)/(31b), may be calculated from a preparation ratio of a raw material compound to be monomer (32b) to a raw material compound to be monomer (31b) in the production of component (b3).

If (b3) contains monomer (33b), a molar ratio of monomer (33b) to monomer (31b) in (b3), (33b)/(31b), is preferably 5/95 or more, more preferably 10/90 or more, further preferably 15/85 or more, furthermore preferably 20/80 or more, furthermore preferably 30/70 or more, furthermore preferably 40/60 or more, furthermore preferably 50/50 or more, furthermore preferably 60/40 or more, furthermore preferably 70/30 or more, and furthermore preferably 72/28 or more, and preferably 95/5 or less, more preferably 90/10 or less, further preferably 80/20 or less, and furthermore preferably 77/23 or less from the viewpoint of fluidity retention performance.

A molar ratio of monomer (33b) to monomer (31b) in (b3), (33b)/(31b), is preferably 5/95 or more, more preferably 10/90 or more, further preferably 15/85 or more, furthermore preferably 20/80 or more, furthermore preferably 30/70 or more, furthermore preferably 40/60 or more, furthermore preferably 50/50 or more, furthermore preferably 60/40 or more, furthermore preferably 70/30 or more, furthermore preferably 72/28 or more, and furthermore preferably 77/23 or more, and preferably 95/5 or less, more preferably 90/10 or less, and further preferably 82/18 or less from the viewpoint of initial strength.

A molar ratio of monomer (33b) to monomer (31b) in (b3), (33b)/(31b), may be calculated from a preparation ratio of a raw material compound to be monomer (33b) to a raw material compound to be monomer (31b) in the production of (b3).

If (b3) contains monomer (32b) and monomer (33b), a molar ratio of a total of monomer (31b) and monomer (32b) to monomer (33b) in (b3), ((31b) + (32b))/(33b), is preferably 99/1 or more, more preferably 95/5 or more, further preferably 90/10 or more, and furthermore preferably 90/10 or more, and preferably 1/99 or less, more preferably 10/90 or less, further preferably 20/80 or less, and furthermore preferably 30/70 or less from the viewpoint of fluidity.

A molar ratio of a total of monomer (31b) and monomer (32b) to monomer (33b) in (b3), ((31b) + (32b))/(33b), may be calculated from a preparation ratio of a raw material compound to be monomer (31b) and a raw material compound to be monomer (32b) to a raw material compound to be monomer (33b) in the production of component (b3).

If (b3) contains monomer (32b), a total amount of monomer (31b) and monomer (32b) in all constituent monomers of (b3) is 70 mol% or more, preferably 80 mol% or more, and more preferably 90 mol% or more, and 100 mol% or less. This total amount may be 100 mol%. If (b3) is a condensation polymer, a total amount of monomer (31b) and monomer (32b) in constituent monomers of (b3) is calculated by excluding aldehydes such as formaldehyde or the like used in the condensation polymerization reaction from constituent monomers of component (b3).

If (b3) contains monomer (33b), a total amount of monomer (31b) and monomer (33b) in all constituent monomers of component (b3) is 70 mol% or more, preferably 80 mol% or more, and more preferably 90 mol% or more, and 100 mol% or less. This total amount may be 100 mol%. If (b3) is a condensation polymer, a total amount of monomer (31b) and monomer (33b) in constituent monomers of (b3) is calculated by excluding aldehydes such as formaldehyde or the like used in the condensation polymerization reaction from constituent monomers of (b3).

If (b3) contains monomer (32b) and monomer (33b), a total amount of monomer (31b), monomer (32b), and monomer (33b) in all constituent monomers of (b3) is 70 mol% or more, preferably 80 mol% or more, and more preferably 90 mol% or more, and 100 mol% or less. This total amount may be 100 mol%.

If (b3) is a condensation polymer, a total amount of monomer (31b), monomer (32b), and monomer (33b) in constituent monomers of (b3) is calculated by excluding aldehydes such as formaldehyde or the like used in the condensation polymerization reaction from constituent monomers of (b3).

A weight average molecular weight of (b3) is preferably 5,000 or more, more preferably 8,000 or more, and further preferably 10,000 or more, and preferably 150,000 or less, more preferably 100,000 or less, and further preferably 50,000 or less from the viewpoint of dispersibility. This weight average molecular weight is measured by gel permeation chromatography (GPC) under the conditions below.

*GPC conditions

Instrument: GPC (HLC-8320GPC) manufactured by Tosoh Corporation
Column: G4000SWXL + G2000SWXL + guard column SWXL (manufactured by Tosoh Corporation)
Eluent: 30 mM $CH_3COONa/CH_3CN$ = 6/4
Flow rate: 0.7 mL/min
Column temperature: room temperature
Detection: RI
Sample size: 0.2 mg/mL

Commercially available products of polymers containing an aromatic compound having a polyalkyleneoxy group can be used. Examples include, for example, MasterGlenium ACE series and MasterEase series from Pozzolith Solutions Ltd., and others.

Copolymer (b3) containing monomer (31b) and monomer (32b) as constituent monomers can be produced, for example, by a method described in JP-A 2020-75840.

Copolymer (b3) containing monomer (31b) and monomer (33b) as constituent monomers can be produced, for example, by a method described in JP-A 2008-517080.

The early strength enhancer for hydraulic compositions of the present invention contains component (b) in an amount of preferably 1 mass% or more and more preferably 5 mass% or more, and preferably 20 mass% or less and more preferably 10 mass% or less in the composition from the viewpoints of dispersibility in calcium carbonate slurries and high early strength of hydraulic compositions.

A mass ratio of a content of component (a) to a content of component (b) in the early strength enhancer for hydraulic compositions of the present invention, (a)/(b), is preferably 50/50 or more, more preferably 60/40 or more, further preferably 65/35 or more, furthermore preferably 69/31 or more, and furthermore preferably 75/25 or more, and preferably 99/1 or less, more preferably 97/3 or less, further preferably 95/5 or less, furthermore preferably 90/10 or less, furthermore preferably 80/20 or less, and furthermore preferably 78/22 or less from the viewpoints of dispersibility in calcium carbonate slurries and high early strength of hydraulic compositions.

A form of the early strength enhancer for hydraulic compositions of the present invention may be either a solid (powder) or a liquid, and is preferably a liquid and further preferably a liquid composition containing water such as a water dispersion or the like.

From the viewpoint of high early strength of hydraulic compositions, the early strength enhancer for hydraulic compositions of the present invention is preferably a water dispersion containing component (a) and water in a state where component (a) is dispersed in water. Component (b) is preferably used to disperse component (a). In other words, the early strength enhancer for hydraulic compositions of the present invention is more preferably a water dispersion containing component (a), component (b), and water in a state where component (a) is dispersed.

If the early strength enhancer for hydraulic compositions of the present invention is a liquid composition containing water and preferably a water dispersion, the composition contains water in an amount of preferably 30 mass% or more and more preferably 40 mass% or more, and preferably 90 mass% or less, more preferably 80 mass% or less, and further preferably 70 mass% or less.

The early strength enhancer for hydraulic compositions of the present invention can further contain other components. Examples include, for example, AE agents, retardants, foaming agents, thickening agents, blowing agents, waterproofing agents, fluidizing agents, defoaming agents, preservatives, darkening inhibitors, shrinkage reducing agents, hydration heat inhibitors, and others (excluding components (a) and (b)).

The early strength enhancer for hydraulic compositions of the present invention can be used by adding it when mixing hydraulic powders such as cement or the like with water to prepare hydraulic compositions. From the viewpoint of improving mixing with hydraulic powders, the early strength enhancer for hydraulic compositions of the present invention is preferably used by mixing it in advance with water when mixing hydraulic powders with water.

Further, from the viewpoint of high early strength of hydraulic compositions, the early strength enhancer for hydraulic compositions of the present invention is preferably mixed into hydraulic compositions in a water dispersion state where optionally component (b), and water are contained in addition to component (a) and component (a) is dispersed in water.

Mixing the early strength enhancer for hydraulic compositions of the present invention into hydraulic compositions makes it possible to obtain hardened products of hydraulic compositions by atmospheric curing at room temperature (for example, 10 to 35°C). The present invention can improve the strength of hardened products after 5 to 20 hours from the preparation of hydraulic compositions without performing curing under heating at 40°C or more, namely, so-called heat curing.

The early strength enhancer for hydraulic compositions of the present invention can be produced by mixing component (a). In other words, the present invention provides a method for producing an early strength enhancer for hydraulic compositions including mixing component (a).

The method for producing an early strength enhancer for hydraulic compositions of the present invention can

further include mixing component (b).

The method for producing an early strength enhancer for hydraulic compositions of the present invention can further include mixing water.

An early strength enhancer for hydraulic compositions in a water dispersion state where component (a) is dispersed in water can be obtained by mixing component (b) and water in addition to component (a).

The matters described in the early strength enhancer for hydraulic compositions of the present invention can be appropriately applied to the method for producing an early strength enhancer for hydraulic compositions of the present invention. For example, specific examples and preferable aspects of each component are also the same as those in the early strength enhancer for hydraulic compositions of the present invention. Further, the content of each component and each mass ratio in the early strength enhancer for hydraulic compositions of the present invention can be applied to the method for producing an early strength enhancer for hydraulic compositions of the present invention by reading the content of each component as a mixing amount.

The present invention provides use of an agent containing component (a) as an early strength enhancer for hydraulic compositions.

The agent of the present invention used in the use as an early strength enhancer for hydraulic compositions can further contain component (b).

The agent of the present invention used in the use as an early strength enhancer for hydraulic compositions can further contain water.

A composition in a water dispersion state where component (a) is dispersed in water can be obtained by containing component (b) and water in addition to component (a).

The matters described in the early strength enhancer for hydraulic compositions of the present invention can be appropriately applied to the use of the agent of the present invention as an early strength enhancer for hydraulic compositions. For example, specific examples and preferable aspects of each component are also the same as those in the early strength enhancer for hydraulic compositions of the present invention. Further, the content of each component and each mass ratio in the early strength enhancer for hydraulic compositions of the present invention can also be applied as they are to the use of the agent of the present invention as an early strength enhancer for hydraulic compositions.

[Hydraulic composition]

The present invention provides a hydraulic composition containing component (a), a hydraulic powder, and water.

The hydraulic composition of the present invention can further contain component (b).

Further, the present invention is a hydraulic composition containing the early strength enhancer for hydraulic compositions of the present invention, a hydraulic powder, and water.

Components (a) and (b) are the same as in the aspects described in the early strength enhancer for hydraulic compositions of the present invention.

The aspects described in the early strength enhancer for hydraulic compositions of the present invention can be appropriately applied to the hydraulic composition of the present invention.

The hydraulic powder used in the hydraulic composition of the present invention is a powder that hardens when mixed with water, and examples include, for example, ordinary Portland cement, high early strength Portland cement, ultra high early strength Portland cement, sulfate resistant Portland cement, low heat Portland cement, white Portland cement, and Eco-Cement (for example, JIS R 5214 or the like). Among these, cement selected from high early strength Portland cement, ordinary Portland cement, sulfate resistant Portland cement, and white Portland cement is preferable, and cement selected from high early strength Portland cement and ordinary Portland cement is more preferable from the viewpoint of reducing the time it takes for the hydraulic composition to reach the required strength.

Further, the hydraulic powder may contain blast furnace slag, fly ash, silica fume, anhydrous gypsum, and others, and may also contain non-hydraulic fine limestone powder, and others. Blast furnace cement, fly ash cement, or silica fume cement obtained by mixing cement with blast furnace slag, fly ash, silica fume, or the like may be used as the hydraulic powder.

Further, examples of the hydraulic powder include cement or a powder obtained by mixing cement and bentonite.

The hydraulic composition of the present invention contains component (a) in an amount relative to 100 parts by mass of the hydraulic powder of preferably 0.05 parts by mass or more, more preferably 0.1 parts by mass or more, further preferably 0.2 parts by mass or more, furthermore preferably 0.3 parts by mass or more, and furthermore preferably 0.4 parts by mass or more from the viewpoint of high early strength of the hydraulic composition, and preferably 2 parts by mass or less, more preferably 1 part by mass or less, further preferably 0.59 parts by mass or less, and further preferably 0.5 parts by mass or less from the viewpoints of high early strength of the hydraulic composition and economy.

If the hydraulic composition of the present invention contains component (b), the composition contains component (b) in an amount relative to 100 parts by mass of the hydraulic powder of preferably 0.05 parts by mass or

more, more preferably 0.10 parts by mass or more, and further preferably 0.15 parts by mass or more from the viewpoints of high early strength of the hydraulic composition and dispersibility, and preferably 1 part by mass or less, more preferably 0.6 parts by mass or less, and further preferably 0.4 parts by mass or less from the viewpoints of high early strength of the hydraulic composition and dispersibility.

A mass ratio of a content of component (a) to a content of component (b) in the hydraulic composition of the present invention, (a)/(b), is preferably 1/99 or more, more preferably 10/90 or more, further preferably 20/80 or more, furthermore preferably 50/50 or more, furthermore preferably 60/40 or more, furthermore preferably 65/35 or more, furthermore preferably 69/31 or more, and furthermore preferably 75/25 or more, and preferably 99/1 or less, more preferably 97/3 or less, further preferably 95/5 or less, furthermore preferably 90/10 or less, furthermore preferably 80/20 or less, and furthermore preferably 78/22 or less from the viewpoints of high early strength of the hydraulic composition and dispersibility.

In the hydraulic composition of the present invention, a mass percentage of water to the hydraulic powder in the hydraulic composition (water/hydraulic powder ratio (W/C)) is preferably 15 mass% or more, more preferably 20 mass% or more, and further preferably 25 mass% or more, and preferably 80 mass% or less, more preferably 70 mass% or less, and further preferably 60 mass% or less from the viewpoints of high early strength of the hydraulic composition, economy, workability, and durability of hardened products.

Here, the water/hydraulic powder ratio (W/C) is a mass percentage (mass%) of water to the hydraulic powder in the hydraulic composition, and is calculated by water/hydraulic powder × 100.

Note that if the hydraulic powder contains a pozzolanic powder and a latent hydraulic powder in addition to a powder having the physical property of hardening by a hydration reaction such as cement or the like, the amount thereof is also added in the amount of the hydraulic powder in the present invention (provided that the amount of calcium carbonate which is component (a) is not added therein). Further, if the powder having the physical property of hardening by a hydration reaction contains a high strength admixture, the amount of the high strength admixture is also added in the amount of the hydraulic powder. The same applies to the other parts by mass or the like which are related to the mass of the hydraulic powder.

The hydraulic composition of the present invention can contain aggregate. Examples of the aggregate include aggregates selected from fine aggregates and coarse aggregates. Examples of the fine aggregates include those prescribed in No. 2311 in JIS A 0203-2014. Examples of the fine aggregates include river sand, land sand, pit sand, sea sand, lime sand, silica sand, and crushed sand of these, blast furnace slag fine aggregate, ferronickel slag fine aggregate, lightweight fine aggregate (artificial and natural), and recycled fine aggregate, or the like. Further, examples of the coarse aggregates include those prescribed in No. 2312 in JIS A 0203-2014. Examples of the coarse aggregates include, for example, river gravel, land gravel, pit gravel, sea gravel, lime gravel, and crushed stone of these, blast furnace slag coarse aggregate, ferronickel slag coarse aggregate, lightweight coarse aggregate (artificial and natural), and recycled coarse aggregate, or the like. A mixture of different types of fine aggregates or coarse aggregates may be used, or a single type thereof may be used.

If the hydraulic composition is concrete, coarse aggregates are used in an amount of preferably 50% or more, more preferably 55% or more, and further preferably 60% or more, and preferably 100% or less, more preferably 90% or less, and further preferably 80% or less by bulk volume from the viewpoints of strength development of the hydraulic composition, reducing the amount of the hydraulic powder such as cement or the like used, and improving formwork filling performance. The bulk volume is the proportion of the volume of coarse aggregates (including voids) per $m^3$ of concrete.

Further, if the hydraulic composition is concrete, fine aggregates are used in an amount of preferably 500 kg/$m^3$ or more, more preferably 600 kg/$m^3$ or more, and further preferably 700 kg/$m^3$ or more, and preferably 1,000 kg/$m^3$ or less and more preferably 900 kg/$m^3$ or less from the viewpoint of improving formwork filling performance.

If the hydraulic composition is mortar, fine aggregates are used in an amount of preferably 800 kg/$m^3$ or more, more preferably 900 kg/$m^3$ or more, and further preferably 1,000 kg/$m^3$ or more, and preferably 2,000 kg/$m^3$ or less, more preferably 1,800 kg/$m^3$ or less, and further preferably 1,700 kg/$m^3$ or less.

The hydraulic composition of the present invention may be concrete or mortar. The hydraulic composition of the present invention is useful in any of the following fields: use in self-leveling, use in refractories, use in plaster, use in light-weight or heavy-weight concrete, use in AE, use in repairing, use in the prepacked, use in tremie, use in ground improvement, use in grouting, use in cold weather, and others. The hydraulic composition is preferably used for concrete products such as vibrated concrete products, centrifugal molded products or the like, secondary tunnel linings, piers of civil engineering structures, beams, box culverts, concrete pavements, and others from the viewpoint of developing strength in about 5 to 20 hours after preparation and enabling early demolding from the formwork.

The hydraulic composition of the present invention can be hardened by atmospheric curing at room temperature (for example, 10 to 35°C). It is possible to obtain hardened products of the hydraulic composition of the present invention with improved strength after 5 to 20 hours from the preparation of the hydraulic composition without performing curing under heating at 40°C or more, namely, so-called heat curing.

The hydraulic composition of the present invention can be produced by mixing component (a), a hydraulic

powder, and water. In other words, the present invention provides a method for producing a hydraulic composition including mixing component (a), a hydraulic powder, and water.

The method for producing a hydraulic composition of the present invention can further include mixing component (b).

The method for producing a hydraulic composition of the present invention may be a producing method including mixing the early strength enhancer for hydraulic compositions of the present invention, a hydraulic powder, and water.

In the method for producing a hydraulic composition of the present invention, it is preferable to mix a composition in a water dispersion state obtained by dispersing component (a) in advance in water from the viewpoint of high early strength of the hydraulic composition. Part or all of component (b) to be mixed into the hydraulic composition is preferably used to disperse component (a). In other words, in the method for producing a hydraulic composition of the present invention, component (a), part or all of component (b), and part or all of the water are more preferably mixed in advance and mixed in a water dispersion state where component (a) is dispersed from the viewpoint of high early strength of the hydraulic composition. Further, the method for producing a hydraulic composition of the present invention can be a producing method including mixing the early strength enhancer for hydraulic compositions of the present invention in a water dispersion state where optionally component (b), and water are contained in addition to component (a) and component (a) is dispersed in water.

The matters described in the early strength enhancer for hydraulic compositions and the hydraulic composition of the present invention can be appropriately applied to the method for producing a hydraulic composition of the present invention. For example, specific examples and preferable aspects of each component are also the same as those in the early strength enhancer for hydraulic compositions and the hydraulic composition of the present invention. Further, the content of each component and each mass ratio in the early strength enhancer for hydraulic compositions and the hydraulic composition of the present invention can be applied to the method for producing a hydraulic composition of the present invention by reading the content of each component as a mixing amount.

In addition to the aforementioned embodiments, the present invention discloses the following aspects.

<1> An early strength enhancer for hydraulic compositions containing (a) calcite with a crystallite size in the (104) plane calculated by the Scherrer equation of 30 nm or less (hereinafter referred to as component (a)).

<2> The early strength enhancer for hydraulic compositions according to <1>, further containing (b) a dispersant (hereinafter referred to as component (b)).

<3> The early strength enhancer for hydraulic compositions according to <2>, wherein component (a) is calcite with a crystallite size in the (104) plane calculated by the Scherrer equation of 10 nm or more and 30 nm or less, component (b) is a polycarboxylic acid-based polymer, and a mass ratio of a content of component (a) to a content of component (b), (a)/(b), is 50/50 or more and 99/1 or less.

<4> The early strength enhancer for hydraulic compositions according to <2>, wherein component (a) is calcite with a crystallite size in the (104) plane calculated by the Scherrer equation of 15 nm or more and 20 nm or less, component (b) is a polycarboxylic acid-based polymer, and a mass ratio of a content of component (a) to a content of component (b), (a)/(b), is 50/50 or more and 99/1 or less.

<5> The early strength enhancer for hydraulic compositions according to <2>, wherein component (a) is calcite with a crystallite size in the (104) plane calculated by the Scherrer equation of 10 nm or more and 30 nm or less, component (b) is a polycarboxylic acid-based polymer, and a mass ratio of a content of component (a) to a content of component (b), (a)/(b), is 75/25 or more and 80/20 or less.

<6> The early strength enhancer for hydraulic compositions according to <2>, wherein component (a) is calcite with a crystallite size in the (104) plane calculated by the Scherrer equation of 15 nm or more and 20 nm or less, component (b) is a polycarboxylic acid-based polymer, and a mass ratio of a content of component (a) to a content of component (b), (a)/(b), is 75/25 or more and 80/20 or less.

<7> A hydraulic composition containing (a) calcite with a crystallite size in the (104) plane calculated by the Scherrer equation of 30 nm or less (hereinafter referred to as component (a)), a hydraulic powder, and water.

<8> The hydraulic composition according to <7>, further containing (b) a dispersant (hereinafter referred to as component (b)).

<9> The hydraulic composition according to <8>, wherein component (a) is calcite with a crystallite size in the (104) plane calculated by the Scherrer equation of 10 nm or more and 30 nm or less, component (b) is a polycarboxylic acid-based polymer, component (a) is contained in an amount of 0.1 parts by mass or more and 2.0 parts by mass or less relative to 100 parts by mass of the hydraulic powder, and a mass ratio of a content of component (a) to a content of component (b), (a)/(b), is 1/99 or more and 99/1 or less.

<10> The hydraulic composition according to <8>, wherein component (a) is calcite with a crystallite size in the (104) plane calculated by the Scherrer equation of 10 nm or more and 30 nm or less, component (b) is a polycarboxylic acid-based polymer, component (a) is contained in an amount of 0.4 parts by mass or more and 0.59 parts by mass or less relative to 100 parts by mass of the hydraulic powder, and a mass ratio of a content of component (a) to a content of

component (b), (a)/(b), is 1/99 or more and 99/1 or less.

<11> The hydraulic composition according to <8>, wherein component (a) is calcite with a crystallite size in the (104) plane calculated by the Scherrer equation of 15 nm or more and 20 nm or less, component (b) is a polycarboxylic acid-based polymer, component (a) is contained in an amount of 0.1 parts by mass or more and 2.0 parts by mass or less relative to 100 parts by mass of the hydraulic powder, and a mass ratio of a content of component (a) to a content of component (b), (a)/(b), is 1/99 or more and 99/1 or less.

<12> The hydraulic composition according to <8>, wherein component (a) is calcite with a crystallite size in the (104) plane calculated by the Scherrer equation of 15 nm or more and 20 nm or less, component (b) is a polycarboxylic acid-based polymer, component (a) is contained in an amount of 0.4 parts by mass or more and 0.59 parts by mass or less relative to 100 parts by mass of the hydraulic powder, and a mass ratio of a content of component (a) to a content of component (b), (a)/(b), is 1/99 or more and 99/1 or less.

<13> The hydraulic composition according to <8>, wherein component (a) is calcite with a crystallite size in the (104) plane calculated by the Scherrer equation of 10 nm or more and 30 nm or less, component (b) is a polycarboxylic acid-based polymer, component (a) is contained in an amount of 0.1 parts by mass or more and 2.0 parts by mass or less relative to 100 parts by mass of the hydraulic powder, and a mass ratio of a content of component (a) to a content of component (b), (a)/(b), is 75/25 or more and 80/20 or less.

<14> The hydraulic composition according to <8>, wherein component (a) is calcite with a crystallite size in the (104) plane calculated by the Scherrer equation of 15 nm or more and 20 nm or less, component (b) is a polycarboxylic acid-based polymer, component (a) is contained in an amount of 0.1 parts by mass or more and 2.0 parts by mass or less relative to 100 parts by mass of the hydraulic powder, and a mass ratio of a content of component (a) to a content of component (b), (a)/(b), is 75/25 or more and 80/20 or less.

<15> The hydraulic composition according to <8>, wherein component (a) is calcite with a crystallite size in the (104) plane calculated by the Scherrer equation of 10 nm or more and 30 nm or less, component (b) is a polycarboxylic acid-based polymer, component (a) is contained in an amount of 0.4 parts by mass or more and 0.59 parts by mass or less relative to 100 parts by mass of the hydraulic powder, and a mass ratio of a content of component (a) to a content of component (b), (a)/(b), is 75/25 or more and 80/20 or less.

<16> The hydraulic composition according to <8>, wherein component (a) is calcite with a crystallite size in the (104) plane calculated by the Scherrer equation of 15 nm or more and 20 nm or less, component (b) is a polycarboxylic acid-based polymer, component (a) is contained in an amount of 0.4 parts by mass or more and 0.59 parts by mass or less relative to 100 parts by mass of the hydraulic powder, and a mass ratio of a content of component (a) to a content of component (b), (a)/(b), is 75/25 or more and 80/20 or less.

<17> A method for producing an early strength enhancer for hydraulic compositions including mixing (a) calcite with a crystallite size in the (104) plane calculated by the Scherrer equation of 30 nm or less (hereinafter referred to as component (a)).

<18> The method for producing an early strength enhancer for hydraulic compositions according to <17>, further including mixing (b) a dispersant (hereinafter referred to as component (b)).

<19> The method for producing an early strength enhancer for hydraulic compositions according to <18>, wherein component (a) is calcite with a crystallite size in the (104) plane calculated by the Scherrer equation of 10 nm or more and 30 nm or less, component (b) is a polycarboxylic acid-based polymer, and a mass ratio of a mixing amount of component (a) to a mixing amount of component (b), (a)/(b), is 50/50 or more and 99/1 or less.

<20> The method for producing an early strength enhancer for hydraulic compositions according to <18>, wherein component (a) is calcite with a crystallite size in the (104) plane calculated by the Scherrer equation of 15 nm or more and 20 nm or less, component (b) is a polycarboxylic acid-based polymer, and a mass ratio of a mixing amount of component (a) to a mixing amount of component (b), (a)/(b), is 50/50 or more and 99/1 or less.

<21> The method for producing an early strength enhancer for hydraulic compositions according to <18>, wherein component (a) is calcite with a crystallite size in the (104) plane calculated by the Scherrer equation of 10 nm or more and 30 nm or less, component (b) is a polycarboxylic acid-based polymer, and a mass ratio of a mixing amount of component (a) to a mixing amount of component (b), (a)/(b), is 75/25 or more and 80/20 or less.

<21> The method for producing an early strength enhancer for hydraulic compositions according to <18>, wherein component (a) is calcite with a crystallite size in the (104) plane calculated by the Scherrer equation of 15 nm or more and 20 nm or less, component (b) is a polycarboxylic acid-based polymer, and a mass ratio of a mixing amount of component (a) to a mixing amount of component (b), (a)/(b), is 75/25 or more and 80/20 or less.

<22> Use as an early strength enhancer for hydraulic compositions of an agent containing (a) calcite with a crystallite size in the (104) plane calculated by the Scherrer equation of 30 nm or less (hereinafter referred to as component (a)).

<23> Use as an early strength enhancer for hydraulic compositions of the agent according to <22>, wherein the agent further contains (b) a dispersant (hereinafter referred to as component (b)).

<24> Use as an early strength enhancer for hydraulic compositions of the agent according to <23>, wherein component (a) is calcite with a crystallite size in the (104) plane calculated by the Scherrer equation of 10 nm or

more and 30 nm or less, component (b) is a polycarboxylic acid-based polymer, and a mass ratio of a content of component (a) to a content of component (b), (a)/(b), is 50/50 or more and 99/1 or less.

<25> Use as an early strength enhancer for hydraulic compositions of the agent according to <23>, wherein component (a) is calcite with a crystallite size in the (104) plane calculated by the Scherrer equation of 15 nm or more and 20 nm or less, component (b) is a polycarboxylic acid-based polymer, and a mass ratio of a content of component (a) to a content of component (b), (a)/(b), is 50/50 or more and 99/1 or less.

<26> Use as an early strength enhancer for hydraulic compositions of the agent according to <23>, wherein component (a) is calcite with a crystallite size in the (104) plane calculated by the Scherrer equation of 10 nm or more and 30 nm or less, component (b) is a polycarboxylic acid-based polymer, and a mass ratio of a content of component (a) to a content of component (b), (a)/(b), is 75/25 or more and 80/20 or less.

<27> Use as an early strength enhancer for hydraulic compositions of the agent according to <23>, wherein component (a) is calcite with a crystallite size in the (104) plane calculated by the Scherrer equation of 15 nm or more and 20 nm or less, component (b) is a polycarboxylic acid-based polymer, and a mass ratio of a content of component (a) to a content of component (b), (a)/(b), is 75/25 or more and 80/20 or less.

## Examples

The materials used in examples and comparative examples are shown below.

<Component (a)>

· Synthesis of a-1

959 g of ion-exchanged water, 50 g of calcium hydroxide (Special Grade reagent, manufactured by FUJIFILM Wako Pure Chemical Corporation), and 1 g of magnesium hydroxide (Special Grade reagent, manufactured by FUJIFILM Wako Pure Chemical Corporation) were prepared in a glass reaction vessel (four-neck flask) with a stirrer. Under a fixed water temperature condition of 15°C, a mixed gas of nitrogen and carbon dioxide (with a ratio of carbon dioxide of 50 volume%) was blown thereinto at a flow rate of 4 L/min until the pH reached 7 to obtain calcium carbonate (calcite) slurry a-1 with a solid content of 6.7 mass%. Note that, after slurry a-1 was stored in an airtight container for 24 hours in an environment at a room temperature of 20°C, vacuum filtration was performed.

· Synthesis of a-2

380 g of ion-exchanged water and 20 g of calcium hydroxide (Special Grade reagent, manufactured by FUJIFILM Wako Pure Chemical Corporation) were prepared in a glass reaction vessel (four-neck flask) with a stirrer, and under a fixed water temperature condition of 7°C, a mixed gas of nitrogen and carbon dioxide (with a ratio of carbon dioxide of 50 volume%) was blown thereinto at a flow rate of 1.6 L/min for 10 minutes. After a lapse of 10 minutes, 20 g of an aqueous solution of 4.4 mass% of sodium sulfate (Special Grade reagent, manufactured by FUJIFILM Wako Pure Chemical Corporation) was added into the flask, and under a fixed water temperature condition of 7°C, the mixed gas was again blown thereinto at a flow rate of 1.6 L/min until the pH reached 7 to obtain calcium carbonate (calcite) slurry a-2 with a solid content of 6.7 mass%. Note that, after slurry a-2 was stored in an airtight container for 4 hours in an environment at a room temperature of 20°C, vacuum filtration and preparation of a-3 were performed.

· Preparation of a-3

100 g of calcium carbonate slurry a-2 with a solid content of 6.7 mass% was weighed in a 300-ml glass beaker, and 6 g of a dilution of b-3 (component (b) described later) adjusted with ion-exchanged water to 6.7 mass% in solid content was added thereto. The slurry was stirred at 6000 rpm for 2 minutes with a homogenizer to disperse calcium carbonate, thereby preparing calcium carbonate slurry dispersion a-3 with a solid content of 6.7 mass%.

<Component (a') (comparative component of component (a))>

· Synthesis of a'-1

380 g of ion-exchanged water and 20 g of calcium hydroxide (Special Grade reagent, manufactured by FUJIFILM Wako Pure Chemical Corporation) were prepared in a glass reaction vessel (four-neck flask) with a stirrer, and under a fixed water temperature condition of 6°C, a mixed gas of nitrogen and carbon dioxide (with a ratio of carbon dioxide of 50 volume%) was blown thereinto at a flow rate of 1.6 L/min until the pH reached 7 to obtain calcium carbonate (calcite) slurry

a'-1 with a solid content of 6.7 mass%.

· Preparation of a'-2

All the steps of the method for preparing a-3 were performed in the same manner except that a'-1 was used in place of a-2 to disperse calcium carbonate, thereby preparing calcium carbonate slurry dispersion a'-2 with a solid content of 6.7 mass%.

· Preparation of a'-3

All the steps of the method for preparing a-3 were performed in the same manner except that a'-1 was used in place of a-2 and sodium oleate (manufactured by FUJIFILM Wako Pure Chemical Corporation) was added in place of b-3 in an amount of 0.5 mass% relative to the solid content of calcium carbonate to disperse calcium carbonate, thereby preparing calcium carbonate slurry dispersion a'-3 with a solid content of 6.7 mass%.

After subjected to vacuum filtration with a Büchner funnel, the obtained calcium carbonate (calcite) slurries a-1, a-2, and a'-1 were dried by nitrogen blow for 60 minutes in an environment at a room temperature of 20°C, and the BET specific surface area, the average primary particle size, the crystallite size in the (104) plane, the average secondary particle size, and the shape of primary aggregates and secondary particles were measured. The results are shown in Table 1. Note that since a-3 is obtained by dispersing calcium carbonate slurry a-2, the BET specific surface area, the average primary particle size, the crystallite size in the (104) plane, the average secondary particle size, and the shape of primary aggregates and secondary particles are the same as those of a-2. Further, since a'-2 and a'-3 are obtained by dispersing calcium carbonate slurry a'-1, the BET specific surface area, the average primary particle size, the crystallite size in the (104) plane, the average secondary particle size, and the shape of primary aggregates and secondary particles are the same as those of a'-1.

[Table 1]

| Component (a) or (a') | | | | | |
|---|---|---|---|---|---|
| Type | BET specific surface area ($m^2/g$) | Average primary particle size (nm) | Average secondary particle size (μm) | Shape of primary aggregates and secondary particles | Crystallite size (nm) |
| a-1 | 65 | 34 | 2.44 | Spherical shape | 20 |
| a-2 | 39 | 57 | 2.09 | Spherical shape | 18 |
| a'-1 | 40 | 55 | 1.97 | Spherical shape | 33 |

The BET specific surface area of each component (a) or (a') was measured by a BET method employing nitrogen gas as the adsorption gas and using a fully automated specific surface area measuring device (the fully automated specific surface area measuring device Macsorb manufactured by MOUNTECH Co., Ltd.)

Further, the average primary particle size of each component (a) or (a') was calculated by the formula below using the above measured BET specific surface area.

$$d = 6/(\rho \times s)$$

d: average particle size (nm)
ρ: density of calcium carbonate (2.71)
s: BET specific surface area

The crystallite size in the (104) plane of each component (a) or (a') was calculated by taking measurements employing an X-ray structure diffractometer (the benchtop X-ray diffractometer MiniFlex600 manufactured by Rigaku Holdings Corporation) and using the following Scherrer equation:

$$D = K\lambda/(\beta\cos\theta)$$

D: crystallite size (nm)
K: Scherrer constant

λ: wavelength of measuring X-ray
β: half width of X-ray peak of measured subject
θ: Bragg angle of X-ray peak of measured subject

The measurements were taken by using CuKα radiation as the X-ray, where the wavelength λ of CuKα is 1.5406 Å. Further, calculations were made with the Scherrer constant as 0.9 and the Bragg angle of the (104) plane of calcite as 14.657 deg. Further, the measurement conditions of the X-ray structure diffractometer were such that a high-speed one-dimensional detector was used, and the measurements were taken at a tube voltage of 40 kV, a tube current of 15 mV, a step size of 0.02 deg, and a step velocity of 10 min/deg.
The average secondary particle size of each component (a) or (a') was measured by using a laser diffraction/-scattering particle size distribution measurement device (LA-920 manufactured by HORIBA, Ltd.) The measurements were taken with a totalization count of 10 times after 2 minutes of ultrasonication using water as the dispersing medium.
Further, the shape of primary aggregates and secondary particles of each component (a) or (a') was observed by a scanning electron microscope (JSM-IT500R manufactured by JEOL Ltd.) under an accelerating voltage condition of 30 kV. 20 secondary particles were arbitrarily selected from among each sample with platinum palladium deposited by evaporation thereon, and the ratio of the short diameter to the long diameter of each particle was measured. If the average ratio of the short diameter to the long diameter of the particles was 1:1 to 1:2, the shape of primary aggregates and secondary particles was considered "spherical shape," and if it was greater than 1:2 (in other words, the ratio of the long diameter was greater than 2), the shape of the particles was considered "chain shape."

<Component (b)>

· b-1: lignin sulfonic acid-based polymer, Polyheed 15S, manufactured by Pozzolith Solutions Ltd.
· b-2: polycarboxylic acid-based polymer, MIGHTY 3000, manufactured by Kao Corporation

· Synthesis of b-3

350.65 g of water was prepared in a glass reaction vessel with a stirrer, the inside air was replaced with nitrogen while stirring the water, and the temperature was raised to 80°C in a nitrogen atmosphere. Both (i) a solution obtained by mixing 512.49 g of an aqueous solution containing methacrylic acid as monomer (11b) and (120 moles (average number of added moles) of methoxy polyethylene glycol) methacrylate as monomer (12b) (hereinafter referred to as MEPEG (120) methacrylate) (water content 39.15 mass%, methacrylic acid content 2.97 mass%, and MEPEG (120) methacrylate content 51.37 mass%), 64.38 g of methacrylic acid, and 7.98 g of 2-mercaptoethanol, and (ii) 5.55 g of ammonium persulfate dissolved in 22.19 g of water were each added dropwise into the vessel for 1.5 hours. Next, 4.44 g of ammonium persulfate dissolved in 17.76 g of water was added dropwise for 30 minutes, followed by aging at the same temperature (80°C) for 1 hour. After the completion of aging, the reaction solution was neutralized with 11.28 g of an aqueous solution of 48% of sodium hydroxide to obtain a reaction product containing a copolymer with a weight average molecular weight (Mw) of 44,000 (hereinafter referred to as copolymer b-1) and water. In this method, the proportion of monomer (11b) to the total of monomer (11b) and monomer (12b) was 23.1 mass%. Further, the concentration of solids in the reaction medium from the dropwise addition of the whole amount of monomer (11b) and monomer (12b) to the completion of the reaction (completion of aging) was 40 mass%.

· Cement: ordinary Portland cement (a mixture of ordinary Portland cement manufactured by TAIHEIYO CEMENT CORPORATION and ordinary Portland cement manufactured by Sumitomo Osaka Cement Co., Ltd. at a mass ratio of 50/50, specific gravity 3.16)
· Water: tap water (Wakayama city tap water, specific gravity 1.00)
· Fine aggregate: pit sand (from Joyo, Kyoto city, saturated surface-dry specific gravity 2.50)

Preparation of mortar

In a laboratory adjusted to 20°C ± 2°C, cement (C) and fine aggregate (S) were put into a mortar mixer (model: 5DM-03-γ, an all-purpose mixing and stirring machine manufactured by Dalton Corporation) in their respective formulation amounts shown in Table 2 (formulation 1 or formulation 2) and dry-mixed at a low rotational speed (63 rpm) of the mortar mixer for 10 seconds, and kneading water (W) containing component (a) or (a') as an early strength enhancer for hydraulic compositions and component (b) at their respective contents shown in Tables 3 to 5 was added thereto. Further, they were kneaded at the low rotational speed (63 rpm) of the mortar mixer for 120 seconds to prepare each mortar.

[Table 2]

| Type of formulation | W/C (mass%) | Formulation amount (g) | | |
|---|---|---|---|---|
| | | Water (W) | Cement (C) | Fine aggregate (S) |
| Formulation 1 | 50 | 200 | 400 | 800 |
| Formulation 2 | 40 | 160 | 400 | 700 |

Filling of mold and curing

In accordance with JIS A 1132, the mortar was filled into a columnar plastic mold (bottom diameter: 5 cm, height: 10 cm) by a two-layer filling method, and hardened by sealing curing in a constant-temperature bath (PR-3J from ESPEC CORP.) adjusted to a predetermined temperature shown in Tables 3 to 5. When a predetermined material age shown in Tables 3 to 5 was reached with the point of time when the kneading water first came in contact with the cement as the starting point, the test specimen was demolded to obtain a test specimen for a strength test. Three test specimens were prepared for each mortar prepared.

(3) Evaluation of hardening strength

The compression strength of each test specimen prepared was measured in accordance with JIS A 1108, and the average value of the three test specimens was determined. The results are shown in Tables 3 to 5.

[Table 3]

<table>
<tr><td colspan="2" rowspan="3"></td><td colspan="6">Hydraulic composition</td><td colspan="2">Hardening strength at material age 18 hours at 10°C (N/mm$^2$)</td></tr>
<tr><td rowspan="2">Type of formulation</td><td colspan="2">Component (a) or (a')</td><td colspan="2">Component (b)</td><td rowspan="2">(a)/(b) (mass ratio)</td><td rowspan="2">Measured value</td><td rowspan="2">Relative ratio</td></tr>
<tr><td>Type</td><td>Content (part by mass)</td><td>Type</td><td>Content (part by mass)</td></tr>
<tr><td>Example</td><td>1-1</td><td rowspan="3">Formulation 1</td><td>a-1</td><td>0.5</td><td rowspan="3">b-1</td><td rowspan="3">0.2</td><td>2.5</td><td>1.2</td><td>133</td></tr>
<tr><td rowspan="2">Comparative example</td><td>1-1</td><td>-</td><td>-</td><td>0</td><td>0.9</td><td>100 (reference)</td></tr>
<tr><td>1-2</td><td>a'-1</td><td>0.5</td><td>2.5</td><td>0.9</td><td>100</td></tr>
</table>

[Table 4]

| | | Hydraulic composition | | | | | | Hardening strength at material age 20 hours at 10°C ($N/mm^2$) | |
|---|---|---|---|---|---|---|---|---|---|
| | | Type of formulation | Component (a) or (a') | | Component (b) | | (a)/(b) (mass ratio) | Measured value | Relative ratio |
| | | | Type | Content (part by mass) | Type | Content (part by mass) | | | |
| Example | 2-1 | Formulation 2 | a-1 | 0.5 | b-2 | 0.18 | 2.78 | 2.0 | 200 |
| | 2-2 | | a-2 | 0.5 | | | 2.78 | 1.8 | 170 |
| | 2-3 | | a-3 | 0.5 | | | 2.28 | 2.3 | 230 |
| Comparative example | 2-1 | | - | - | | | 0 | 1.0 | 100 (reference) |
| | 2-2 | | a'-1 | 0.5 | | | 2.78 | 1.1 | 110 |
| | 2-3 | | a'-2 | 0.5 | | | 2.28 | 1.1 | 110 |
| | 2-4 | | a'-3 | 0.5 | | | 2.78 | 1.0 | 100 |

[Table 5]

| | | Hydraulic composition | | | | | | Hardening strength at material age 6 hours at 35°C ($N/mm^2$) | |
|---|---|---|---|---|---|---|---|---|---|
| | | Type of formulation | Component (a) or (a') | | Component (b) | | (a)/(b) (mass ratio) | Measured value | Relative ratio |
| | | | Type | Content (part by mass) | Type | Content (part by mass) | | | |
| Example | 3-1 | Formulation 2 | a-1 | 0.5 | b-2 | 0.16 | 3.13 | 2.7 | 300 |
| Comparative example | 3-1 | | - | - | | | 0 | 0.9 | 100 (reference) |
| | 3-2 | | a'-1 | 0.5 | | | 3.13 | 1.0 | 111 |

In Tables 3 to 5, the content of component (a) or (a') is expressed as the content of the active component (parts by mass) relative to 100 parts by mass of the hydraulic powder in each hydraulic composition, the content of component (b) is expressed as the content of the active component (parts by mass) relative to 100 parts by mass of the hydraulic powder in the hydraulic composition, and the mass ratio (a)/(b) is expressed as the mass ratio of the content of component (a) to the content of component (b) in the hydraulic composition. Further, the mass ratios (a)/(b) of example 2-3 and comparative example 2-3 are expressed as those given by taking the amount of b-3 into consideration since calcium carbonate slurry

dispersions a-3 and a'-2 contain b-3 as component (b).

Further, in Table 3, the compression strength of example 1-1 and comparative examples 1-1 to 1-2 is expressed as relative ratios of the compression strength with comparative example 1-1 taken as 100.

Further, in Table 4, the compression strength of examples 2-1 to 2-3 and comparative examples 2-1 to 2-4 is expressed as relative ratios of the compression strength with comparative example 2-1 taken as 100.

Further, in Table 5, the compression strength of example 3-1 and comparative examples 3-1 to 3-2 is expressed as relative ratios of the compression strength with comparative example 3-1 taken as 100.

## Claims

1. An early strength enhancer for hydraulic compositions comprising (a) calcite with a crystallite size in the (104) plane calculated by the Scherrer equation of 30 nm or less (hereinafter referred to as component (a)).

2. The early strength enhancer for hydraulic compositions according to claim 1, wherein an average secondary particle size of the component (a) is 1 μm or more and 20 μm or less.

3. The early strength enhancer for hydraulic compositions according to claim 1 or 2, wherein secondary particles of the component (a) are spherical.

4. The early strength enhancer for hydraulic compositions according to any one of claims 1 to 3, further comprising (b) a dispersant (hereinafter referred to as component (b)).

5. The early strength enhancer for hydraulic compositions according to claim 4, wherein the component (b) is a polycarboxylic acid-based polymer.

6. The early strength enhancer for hydraulic compositions according to claim 4 or 5, wherein a mass ratio of a content of the component (a) to a content of the component (b), (a)/(b), is 50/50 or more and 99/1 or less.

7. The early strength enhancer for hydraulic compositions according to any one of claims 1 to 4, further comprising water.

8. An early strength enhancer for hydraulic compositions consisting of (a) calcite with a crystallite size in the (104) plane calculated by the Scherrer equation of 30 nm or less (hereinafter referred to as component (a)).

9. A hydraulic composition comprising (a) calcite with a crystallite size in the (104) plane calculated by the Scherrer equation of 30 nm or less (hereinafter referred to as component (a)), a hydraulic powder, and water.

10. The hydraulic composition according to claim 9, comprising the component (a) in an amount of 0.1 parts by mass or more and 2 parts by mass or less relative to 100 parts by mass of the hydraulic powder.

11. The hydraulic composition according to claim 9 or 10, further comprising (b) a dispersant (hereinafter referred to as component (b)).

12. The hydraulic composition according to claim 11, wherein the component (b) is a polycarboxylic acid-based polymer.

13. The hydraulic composition according to claim 11 or 12, wherein a mass ratio of a content of the component (a) to a content of the component (b), (a)/(b), is 1/99 or more and 99/1 or less.

14. A method for producing an early strength enhancer for hydraulic compositions comprising mixing (a) calcite with a crystallite size in the (104) plane calculated by the Scherrer equation of 30 nm or less (hereinafter referred to as component (a)).

15. The method for producing an early strength enhancer for hydraulic compositions according to claim 14, wherein an average secondary particle size of the component (a) is 1 μm or more and 20 μm or less.

16. The method for producing an early strength enhancer for hydraulic compositions according to claim 14 or 15, wherein secondary particles of the component (a) are spherical.

**17.** The method for producing an early strength enhancer for hydraulic compositions according to any one of claims 14 to 16, further comprising mixing (b) a dispersant (hereinafter referred to as component (b)).

**18.** The method for producing an early strength enhancer for hydraulic compositions according to claim 17, wherein the component (b) is a polycarboxylic acid-based polymer.

**19.** The method for producing an early strength enhancer for hydraulic compositions according to claim 17 or 18, wherein a mass ratio of a mixing amount of the component (a) to a mixing amount of the component (b), (a)/(b), is 50/50 or more and 99/1 or less.

**20.** The method for producing an early strength enhancer for hydraulic compositions according to any one of claims 14 to 19, further comprising mixing water.

**21.** A method for producing a hydraulic composition comprising mixing (a) calcite with a crystallite size in the (104) plane calculated by the Scherrer equation of 30 nm or less (hereinafter referred to as component (a)), a hydraulic powder, and water.

**22.** The method for producing a hydraulic composition according to claim 21, wherein the component (a) is mixed in an amount of 0.1 parts by mass or more and 2 parts by mass or less relative to 100 parts by mass of the hydraulic powder.

**23.** The method for producing a hydraulic composition according to claim 21 or 22, further comprising mixing (b) a dispersant (hereinafter referred to as component (b)).

**24.** The method for producing a hydraulic composition according to claim 23, wherein the component (b) is a polycarboxylic acid-based polymer.

**25.** The method for producing a hydraulic composition according to claim 23 or 24, wherein the component (a), part or all of the component (b), and part or all of the water are mixed in advance, and mixed with the hydraulic powder in a water dispersion state where the component (a) is dispersed.

**26.** Use as an early strength enhancer for hydraulic compositions of an agent comprising (a) calcite with a crystallite size in the (104) plane calculated by the Scherrer equation of 30 nm or less (hereinafter referred to as component (a)).

**27.** Use as an early strength enhancer for hydraulic compositions of the agent according to claim 26, wherein the agent further comprises (b) a dispersant (hereinafter referred to as component (b)).

**28.** Use as an early strength enhancer for hydraulic compositions of the agent according to claim 27, wherein the component (b) is a polycarboxylic acid-based polymer.

**29.** Use as an early strength enhancer for hydraulic compositions of the agent according to claim 27 or 28, wherein a mass ratio of a content of the component (a) to a content of the component (b), (a)/(b), is 50/50 or more and 99/1 or less.

**30.** A method for producing (a) calcite with a crystallite size in the (104) plane calculated by the Scherrer equation of 30 nm or less comprising the following step 1, step 2, and step 3,

step 1: a step of mixing calcium hydroxide, water, and the following component (c) at a mass ratio of a mixing amount of calcium hydroxide to a mixing amount of the component (c) (calcium hydroxide/(c)) of 10 or more and 100 or less to prepare a water dispersion of calcium hydroxide,
component (c): one or more compounds selected from hydroxides of alkaline earth metals, sulfates, magnesium salts, zinc salts, organic acids and salts thereof, and polyacrylic acid and salts thereof,
step 2: a step of blowing carbon dioxide gas into the water dispersion prepared in step 1 while keeping the water dispersion at 7°C or more and 30°C or less to produce a calcite water dispersion, and
step 3: a step of aging, storing, or drying the calcite water dispersion obtained in step 2 at 40°C or less.

## INTERNATIONAL SEARCH REPORT

International application No.
**PCT/JP2023/036746**

### A. CLASSIFICATION OF SUBJECT MATTER

***C04B 22/10***(2006.01)i; ***C01F 11/18***(2006.01)i; ***C04B 24/26***(2006.01)i; ***C04B 28/02***(2006.01)i
FI: C04B22/10; C04B24/26 F; C04B28/02; C01F11/18 D

According to International Patent Classification (IPC) or to both national classification and IPC

### B. FIELDS SEARCHED

Minimum documentation searched (classification system followed by classification symbols)

C04B; C01F11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2018-140902 A (SHIRAISHI KOGYO KAISHA LTD) 13 September 2018 (2018-09-13) paragraphs [0075]-[0084], table 1 | 30<br>1-29 |
| A | CN 111925138 A (KANG, Yanan) 13 November 2020 (2020-11-13) paragraph [0023] | 1-29 |
| A | KR 10-2278202 B1 (SONG, Ji-Yeon) 19 July 2021 (2021-07-19) paragraph [0055] | 1-29 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/036746**

| Patent document cited in search report | Publication date (day/month/year) | Patent family member(s) | Publication date (day/month/year) |
|---|---|---|---|
| JP 2018-140902 A | 13 September 2018 | US 2020/0062608 A1<br>table 1, paragraphs [0091]-[0103]<br>WO 2018/159484 A1<br>EP 3590892 A1<br>CN 110366539 A<br>KR 10-2019-0124717 A | |
| CN 111925138 A | 13 November 2020 | (Family: none) | |
| KR 10-2278202 B1 | 19 July 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017206428 A
- JP H812397 A
- JP 2016108183 A
- JP 2015229764 A
- JP 2003002714 A
- JP 2007105899 A
- JP 2007261119 A
- JP 2015193804 A
- JP 2011240224 A
- JP 2015212216 A
- JP S6337058 B
- JP 2015113248 A
- JP 2020075840 A
- JP 2008517080 A